(19) Europäisches Patentamt
European Patent Office
Office européen des brevets

(11) EP 0 773 720 B1

(12) **FASCICULE DE BREVET EUROPEEN**

(45) Date de publication et mention de la délivrance du brevet: **18.10.2000 Bulletin 2000/42**

(21) Numéro de dépôt: **95926401.1**

(22) Date de dépôt: **20.07.1995**

(51) Int Cl.7: **A01N 43/50**
// (A01N43/50, 59:26, 57:12, 47:38, 47:34, 47:14, 43:76, 43:653, 43:54, 43:40, 37:50, 37:46, 37:38, 37:34)

(86) Numéro de dépôt international: **PCT/FR95/00972**

(87) Numéro de publication internationale: **WO 96/03044 (08.02.1996 Gazette 1996/07)**

(54) **COMPOSITION FONGICIDE COMPRENANT UNE 2-IMIDAZOLINE-5-ONE**

FUNGIZIDE ZUSAMMENSETZUNG DIE EIN 2-IMIDAZOLIN-5-ON ENTHAELT

FUNGICIDAL COMPOSITION INCLUDING A 2-IMIDAZOLINE-5-ONE

(84) Etats contractants désignés:
**AT BE CH DE DK ES FR GB GR IE IT LI LU NL PT SE**

(30) Priorité: **22.07.1994 FR 9409331**

(43) Date de publication de la demande: **21.05.1997 Bulletin 1997/21**

(73) Titulaire: **AVENTIS CROPSCIENCE S.A.
69009 Lyon (FR)**

(72) Inventeur: **LATORSE, Marie-Pascale
F-69210 Sourcieux-les-Mines (FR)**

(56) Documents cités:
**EP-A- 0 551 048**
**EP-A- 0 599 749**
**EP-A- 0 629 616**
**WO-A-93/24467**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

EP 0 773 720 B1

## Description

La présente invention a pour objet une composition fongicide comprenant un composé de type 2-imidazoline-5-one et un procédé mettant en oeuvre ladite composition et destiné à protéger, à titre curatif ou préventif, les cultures contre les attaques fongiques.

On connaît, notamment par la demande de brevet européen EP 551048, des composés racémiques dérivés de 2-imidazoline-5-ones à action fongicide, permettant de prévenir la croissance et le développement de champignons phytopathogènes susceptibles d'attaquer les cultures.

La demande de brevet WO-A-96/03044 décrit des imidazolinones à action fongicide et les compositions agrochimiques qui les contiennent.

Il est cependant toujours désirable d'améliorer le spectre d'activité et l'efficacité de tels composés à action fongicide.

Il est aussi souhaitable de disposer de produits fongicides ayant une activité curative, puisque dans ce cas il est possible de diminuer le nombre des traitements préventifs systématiques, tout en assurant un bon contrôle des parasites.

Il est également très souhaitable de disposer de produits fongicides bénéficiant d'une persistance d'action améliorée, de nature à espacer dans le temps le nombre de traitements phytosanitaires nécessaires au bon contrôle des parasites.

Il est dans tous les cas particulièrement avantageux de pouvoir diminuer la quantité de produits chimiques épandus dans l'environnement, tout en assuran une protection performante des cultures contre les attaques fongiques, c'est-à-dire de disposer de compositions dont les composants produisent un effet synergique.

Il a maintenant été trouvé qu'un (ou plusieurs) des objectifs précédents pouvait être atteint grâce à la composition fongicide selon la présente invention.

La présente invention a donc pour objet en premier lieu une composition fongicide synergique comprenant un composé A de formule (I) :

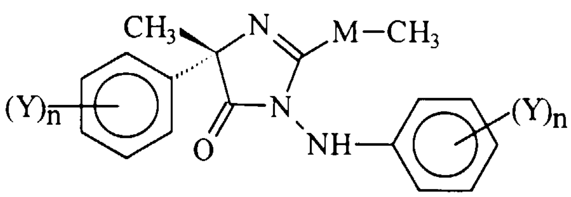

(I)

dans laquelle :

- M représente un atome d'oxygène ou de soufre ;
- n est un nombre entier égal à 0 ou 1 ;
- Y est un atome de fluor ou de chlore, ou un radical méthyle ;

et au moins un composé fongicide B choisi dans le groupe comprenant :

- les dérivés de l'acide dithiocarbamique et de ses sels comme le manèbe, le mancozèbe, le zinèbe, le métirame-zinc,
- les dérivés de l'acide phosphoreux comme les phosphites métalliques tel que le phoséthyl-Al, et l'acide phosphoreux lui-même et ses sels alcalins ou alcalino-terreux,
- les dérivés chlorés du benzène, tels que le chlorothalonil,
- les dérivés comprenant un hétérocycle renfermant de 1 à 2 atomes d'azote tels que le fluazinam, le fludioxonil, le prochloraz,
- les dérivés de triazoles tels que le bromuconazole, le cyproconazole, le difenoconazole, le diniconazole, l'epoxyconazole, le fenbuconazole, le flusilazole, le flutriafol, l'hexaconazole, le metconazole, le tebuconazole, le tetraconazole, le triticonazole,
- les dérivés dicarboximides comme le captane, le folpel, le captafol, l'iprodione, la procymidone, la vinchlozoline,
- le cuivre ou les dérivés organiques ou inorganiques du cuivre, comme l'oxychlorure de cuivre ou l'hydroxyde de cuivre,
- les amides telles que le cymoxanil, le métalaxyl, le bénalaxyl et l'oxadixyl,

- les dérivés de morpholine tels que le diméthomorphe, le dodémorphe, le tridémorphe, le fenpropimorphe, la fenpropidine, le triadimenol,
- les dérivés de type méthoxyacrylate tels que le méthyl-(E)-2-{2-[6-(2-cyanophenoxy)pyrimidin-4-yloxy]phenyl}-3-methoxyacrylate, le methyl-(E)-methoximino[α-(o-tolyloxy)-o-tolyl]acetate, ou encore le N-methyl-(E)-methoxymino[2-(2,5-dimethyl phenoxymethyl)phenyl]acetamide,
- les dérivés de guanidine tels que la dodine,
- un dérivé de type phénylbenzamide de formule (II) :

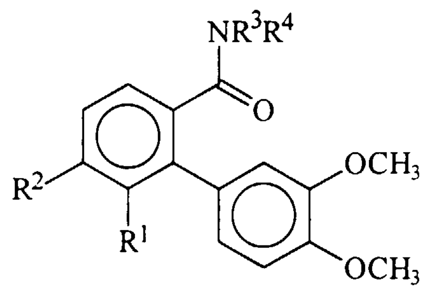

(II)

dans laquelle :

- $R^1$ et $R^2$, identiques ou différents, sont un atome d'hydrogène ou d'halogène, ou un radical alkyle éventuellement halogéné, et
- $R^3$ et $R^4$, identiques ou différents, sont un radical alkyle de 1 à 4 atomes de carbone.

La composition fongicide selon l'invention comprend avantageusement les composants A et B dans un rapport en poids A/B , compris entre 0,0005 et 50, de préférence entre 0,001 et 10.

Il est bien entendu que ladite composition fongicide peut renfermer un seul composé B ou plus d'un tel composé, par exemple 1, 2 ou 3 composés B selon l'utilisation à laquelle elle est destinée.

On préfère la composition fongicide selon l'invention pour laquelle le composé A est le composé de formule (I) dans laquelle M est un atome de soufre et n est égal à 0, encore appelé la (4-S) 4-méthyl-2-méthylthio-4-phényl-1-phénylamino-2-imidazoline-5-one.

On préfère comme signification du composé B l'un des dérivés suivants:

- un dérivé de l'acide dithiocarbamique et de ses sels choisi parmi le manèbe, le mancozèbe, le métirame-zinc,
- un dérivé de l'acide phosphoreux choisi parmi le phoséthyl-Al, et l'acide phosphoreux lui-même et ses sels de calcium ou de potassium,
- le chlorothalonil,
- un dérivé comprenant un hétérocycle renfermant de 1 à 2 atomes d'azote choisi parmi le fluazinam, le fludioxonil, le prochloraz,
- un dérivé de triazole choisi parmi le bromuconazole, le difenoconazole, l'epoxyconazole, le tebuconazole, le triticonazole,
- un dérivé dicarboximide choisi parmi le folpel ou l'iprodione,
- un dérivé du cuivre choisi parmi l'oxychlorure de cuivre ou l'hydroxyde de cuivre,
- une amide choisi parmi le cymoxanil, le métalaxyl ou l'oxadixyl,
- le diméthomorphe,
- le dérivé de type phénylbenzamide qui répond à la formule (I) dans laquelle $R^1$ représente un atome d'hydrogène, $R^2$ représente un radical trifluorométhyl, $R^3$ représente un radical méthyle et $R^4$ représente un radical éthyle, autrement dit le dérivé de type phénylbenzamide appelé N-méthyl-N-éthyl-2-(3,4-diméthoxyphényl)-4-trifluorométhylbenzamide.

Parmi les significations plus spécialement préférées du composé B définies ci-dessus, on préfère encore le phoséthyl Al, le mancozèbe, le cymoxanil, le diméthomorphe, l'oxadixyl ou le N-méthyl-N-éthyl-2-(3,4-diméthoxyphényl)-4-trifluorométhylbenzamide. De manière parfaitement inattendue, la composition selon l'invention améliore alors de façon notable l'action des matières actives prises séparément pour un certain nombre de champignons particulièrement nuisibles pour les cultures, comme en particulier la vigne ou les solanées. Cette amélioration se traduit notamment par une diminution des doses de chacun des constituants, ce qui est particulièrement avantageux pour l'utilisateur et l'environnement. Le produit fongicide présente ainsi des propriétés synergiques attestées par l'application de la méthode de Tammes, "Isoboles, a graphic représentation of synergism in pesticides" Netherlands Journal of Plant Pathology, 70(1964), p. 73-80 ou comme défini par Limpel, L.E., P.H. Schuldt et D.Lammont, 1962, Proc. NEWCC 16: 48-53, en utilisant la formule suivante, encore appelée formule de Colby :

$$E= X + Y - X.Y/100$$

dans laquelle:

- E est le pourcentage attendu d'inhibition de la croissance du champignon par un mélange des deux fongicides A et B à des doses définies. respectivement égales à a et b ;
- X est le pourcentage d'inhibition observé par le fongicide A à la dose a,
- Y est le pourcentage d'inhibition observé par le fongicide B à la dose b.

Quand le pourcentage d'inhibition observé du mélange est supérieur à E, il y a synergie.

De manière préférée, lorsque le composant B est un dérivé de l'acide phosphoreux, et est notamment le phoséthyl-Al, le rapport A/B est compris entre 0,001 et 2, de préférence entre 0,002 et 1.

De manière préférée, lorsque le composant B est un dérivé de formule (II), et est notamment le N-méthyl-N-éthyl-2-(3,4-diméthoxyphényl)-4-trifluorométhylbenzamide, le rapport A/B est compris entre 0,1 et 10, de préférence entre 0,2 et 10, et de façon encore plus préférée entre 0,25 et 4.

De manière préférée, lorsque le composant B est le cymoxanil, le rapport A/B est compris entre 0,05 et 4, de préférence entre 0,2 et 4, et de façon encore plus préférée entre 0,25 et 4.

De manière préférée, lorsque le composant B est l'oxadixyl, le rapport A/B est compris entre 0,5 et 30, de préférence entre 0,5 et 10.

De manière préférée, lorsque le composant B est un dérivé de l'acide dithiocarbamique tel que le mancozèbe, le rapport A/B est compris entre 0,02 et 2, de préférence entre 0,1 et 1.

De manière préférée, lorsque le composant B est un dérivé de morpholine et notamment le diméthomorphe, le rapport A/B est compris entre 0,1 et 2, de préférence entre 0,2 et 1.

Le composé A est décrit dans la demande de brevet européen N° 94420167.2 non publiée au jour du dépôt de la présente demande de brevet.

Le composé A de formule (I) dans laquelle M est un atome de soufre et n est égal à 0, autrement dit la (4-S) 4-méthyl-2-méthylthio-4-phényl-1-phénylamino-2-imidazoline-5-one, peut être préparé de la façon suivante.

Préparation de la (4-S) 4-méthyl-2-méthylthio-4-phényl-1-phénylamino-2-imidazoline-5-one :

Cette préparation s'effectue en deux étapes.

Première étape :

Dans une première étape, on prépare tout d'abord le (2-S) 2-isothiocyanato-2-phényl propionate de méthyle, selon un des procédés cités dans Sulfur Reports Volume 8 (5) pages 327-375 (1989), à partir de l'amino ester correspondant, lui-même obtenu facilement à partir de l'α-aminoacide.

Ainsi, dans un réacteur de 20 l, on introduit 780 g (3,61 moles) de (+) chlorydrate de (2-S) 2-amino-2-phényl propionate de méthyle puis 3,4 l d'eau. La température est amenée à 20°C. On ajoute 3,4 l de toluène puis on additionne par fraction 911 g (10,8 moles) d'hydrogénocarbonate de sodium pendant 1 heure. La température descent à 8-9°C. On coule 276 ml (3,61 moles) de thiophosgène pendant 2 heures. La réaction s'accompagne d'un dégagement gazeux et d'une élévation de température qui atteind 24°C en fin de coulée. Le milieu est encore maintenu 2 heures sous agitation. Après décantation, la phase aqueuse est extraite avec 2 l de toluène. Les phases toluèniques réunies sont lavées avec 4 l d'eau puis séchées sur sulfate de magnésium. La solution est concentrée sous pression réduite.

On obtient ainsi 682 g de (+) (2-S) 2-isothiocyanato-2-phényl propionate de méthyle sous la forme d'une huile légèrement colorée (Rendement = 85 %).

On mesure un pouvoir rotatoire, selon la méthode usuelle et pour une solution de 0,78 g de produit dans 100 ml de chloroforme, égal à + 16° ( + ou - 6,4° ), à une température de 29°C.

Deuxième étape :

Dans une deuxième étape, 682 g (3,08 moles) de (2-S) 2-phényl-2-isothiocyanato propionate de méthyle, préparé de la manière qui vient d'être décrite sont dissous dans 4 l de tétrahydrofurane anhydre, puis introduits dans un réacteur de 20 l parcouru par un courant d'argon . L'ensemble est refroidi à 15°C. On coule 343 g (3,08 moles) de phénylhydrazine dissoute dans 2 l de tétrahydrofurane en 30 mn en maintenant la température entre 15°C et 18°C. Le milieu est maintenu sous agitation pendant 40 mn puis refroidi à 0°. On coule une solution de 346 g (3,08 moles) de tertiobutylate de potassium dans 4 l de tétrahydrofurane en 1 heure tout en maintenant la température à 0°C. L'agitation du milieu est pousuivie pendant 2 heures à 0°C et on observe la formation d'un précipité rose clair. On coule 218 ml (3,39 moles) d'iodure de méthyle en 15 mn en maintenant la température entre 0°C et 3°C puis on laisse remonter la température à l'ambiante en maintenant l'agitation pendant 2 heures. Le mélange réactionnel est versé sur 5 l d'eau. Après décantation, la phase aqueuse est extraite avec 3 fois 3 l d'acétate d'éthyle. Les phases organiques rassemblées sont lavées avec 5 l d'eau, séchées sur sulfate de magnésium puis concentrées sous pression réduite. On obtient 1099 g d'un solide brun. Celui-ci est recristallisé dans 2 1 de toluène.
On obtient, après séchage, 555 g de (+) (4-S) 4-méthyl-2-méthylthio-4-phényl-1-phénylamino-2-imidazoline-5-one sous la forme d'un solide blanc cassé fondant à 138°C (Rendement = 58 %).
On mesure un pouvoir rotatoire, selon la méthode usuelle et pour une solution de 0,86 g de produit dans 100 ml d'éthanol, égal à + 61,1° (+ ou - 2, 9°) à 27 °C.
On mesure par chromatographie liquide haute performance sur phase chirale un taux d'excès enantiomérique (e.e) supérieur à 98 %.
Le composé A de formule (I) dans laquelle M est un atome d'oxygène et n est égal à 0 est obtenu en faisant réagir la (4-S) 4-méthyl-2-méthylthio-4-phényl-1-phénylamino-2-imidazoline-5-one avec du méthanol et en présence de sodium, selon un procédé décrit dans la demande de brevet EP 599749.
Le composé A de formule (I) dans laquelle n est égal à 1 est obtenu à partir des modes de réalisation indiqués précédemment moyennant des modifications des réactifs de départ aisément accessibles à l'homme du métier.
Les structures correspondant aux noms communs des matières actives fongicides figurant dans la définition de B sont indiquées dans l'un au moins des 2 ouvrages suivants:

- "The pesticide manual" édité par Charles R. Worthing et Raymond J. Hance et publié par le British Crop Protection Council, 9ème édition ;
- l'Index phytosanitaire 1994, édité par l'Association de Coordination Technique Agricole, 30ème édition.

En ce qui concerne les dérivés de type méthoxyacrylate, le méthyl-(E)-2-{2-[6-(2-cyanophenoxy)pyrimidin-4-yloxy]phenyl}-3-methoxyacrylate est décrit dans la demande internationale WO 9208703 ; le methyl-(E)-methoximino [α-(o-tolyloxy)-o-tolyl]acetate est décrit dans la demande de brevet européen EP 253213 ; le N-methyl-(E)-methoxymino[2-(2,5-dimethyl phenoxymethyl)phenyl]acetamide est décrit dans la demande de brevet européen EP 398692.
Le dérivé de type phénylbenzamide est décrit dans la demande de brevet européen EP 0 578 586 publiée le 12 Janvier 1994.
La composition fongicide selon l'invention comprend, comme matière active, le composé A et au moins un composé B en mélange avec les supports solides ou liquides, acceptables en agriculture et les agents tensio-actifs également acceptables en agriculture. En particulier sont utilisables les supports inertes et usuels et les agents tensio-actifs usuels. Ces compositions recouvrent non seulement les compositions prêtes à être appliquées sur la culture à traiter au moyen d'un dispositif adapté, tel qu'un dispositif de pulvérisation, mais également les compositions concentrées commerciales qui doivent être diluées avant application sur la culture. On désigne par matière active la combinaison du composé A avec au moins un composé B.
Ces compositions peuvent contenir aussi toute sorte d'autres ingrédients tels que, par exemple, des colloïdes protecteurs, des adhésifs, des épaississants, des agents thixotropes, des agents de pénétration, des stabilisants, des séquestrants, etc... Plus généralement les composés A et B peuvent être combinés à tous les additifs solides ou liquides correspondant aux techniques habituelles de la mise en formulation.
D'une façon générale, les compositions selon l'invention contiennent habituellement de 0,05 à 95 % (en poids) de matière active, un ou plusieurs supports solides ou liquides et, éventuellement, un ou plusieurs agents tensioactifs.
Par le terme "support", dans le présent exposé, on désigne une matière organique ou minérale, naturelle ou synthétique, avec laquelle la matière active est combinée pour faciliter son application sur les parties aériennes de la plante. Ce support est donc généralement inerte et il doit être acceptable en agriculture, notamment sur la plante traitée. Le support peut être solide (argiles, silicates naturels ou synthétiques, silice, résines, cires, engrais solides, etc...) ou liquide (eau, alcools, notamment le butanol etc...).
L'agent tensioactif peut être un agent émulsionnant, dispersant ou mouillant de type ionique ou non ionique ou un mélange de tels agents tensioactifs. On peut citer par exemple des sels d'acides polyacryliques, des sels d'acides

lignosulfoniques, des sels d'acides phénolsulfoniques ou naphtalènesulfoniques, des polycondensats d'oxyde d'éthylène sur des alcools gras ou sur des acides gras ou sur des amines grasses, des phénols substitués (notamment des alkylphénols ou des arylphénols), des sels d'esters d'acides sulfosucciniques, des dérivés de la taurine (notamment des alkyltaurates), des esters phosphoriques d'alcools ou de phénols polyoxyéthylés, des esters d'acides gras et de polyols, les dérivés à fonction sulfates, sulfonates et phosphates des composés précédents. La présence d'au moins un agent tensioactif est généralement indispensable lorsque la matière active et/ou le support inerte ne sont pas solubles dans l'eau et que l'agent vecteur de l'application est l'eau.

Ainsi donc, les compositions à usage agricole selon l'invention peuvent contenir la matière active dans de très larges limites, allant de 0,05 % à 95 % (en poids). Leur teneur en agent tensio-actif est avantageusement comprise entre 5 % et 40 % en poids.

Ces compositions selon l'invention sont elles-mêmes sous des formes assez diverses, solides ou liquides.

Comme formes de compositions solides, on peut citer les poudres pour poudrage (à teneur en matière active pouvant aller jusqu'à 100 %) et les granulés, notamment ceux obtenus par extrusion, par compactage, par imprégnation d'un support granulé, par granulation à partir d'une poudre (la teneur en matière active dans ces granulés étant entre 0,5 et 80 % pour ces derniers cas), les comprimés ou tablettes effervescents.

La composition fongicide selon l'invention peut encore être utilisée sous forme de poudres pour poudrage ; on peut aussi utiliser une composition comprenant 50 g de matière active et 950 g de talc ; on peut aussi utiliser une composition comprenant 20 g de matière active, 10 g de silice finement divisée et 970 g de talc ; on mélange et broie ces constituants et on applique le mélange par poudrage.

Comme formes de compositions liquides ou destinées à constituer des compositions liquides lors de l'application, on peut citer les solutions, en particulier les concentrés solubles dans l'eau, les concentrés émulsionnables, les émulsions, les suspensions concentrées, les aérosols, les poudres mouillables (ou poudre à pulvériser), les pâtes, les gels.

Les concentrés émulsionnables ou solubles comprennent le plus souvent 10 à 80 % de matière active, les émulsions ou solutions prêtes à l'application contenant, quant à elles, 0,001 à 20 % de matière active.

En plus du solvant, les concentrés émulsionnables peuvent contenir quand c'est nécessaire, 2 à 20 % d'additifs appropriés comme les stabilisants, les agents tensio-actifs, les agents de pénétration, les inhibiteurs de corrosion, les colorants ou les adhésifs précédemment cités.

A partir de ces concentrés, on peut obtenir par dilution avec de l'eau des émulsions de toute concentration désirée, qui conviennent particulièrement à l'application sur les cultures.

A titre d'exemple, voici la composition de quelques concentrés émulsionnables :

Exemple CE 1 :

- matière active 400 g/l
- dodécylbenzène sulfonate alcalin 24 g/l
- nonylphénol oxyéthylé à 10 molécules d'oxyde d'éthylène 16 g/l
- cyclohexanone 200 g/l
- solvant aromatique q.s.p. 1 litre

Selon une autre formule de concentré émulsionnable, on utilise :

Exemple CE 2

- matière active 250 g
- huile végétale époxydée 25 g
- mélange de sulfonate d'alcoylaryle et d'éther de polyglycol et d'alcools gras 100 g
- diméthylformamide 50 g
- xylène 575 g

Les suspensions concentrées, également applicables en pulvérisation. sont préparées de manière à obtenir un produit fluide stable ne se déposant pas et elles contiennent habituellement de 10 à 75 % de matière active, de 0,5 à 15 % d'agents tensioactifs, de 0,1 à 10 % d'agents thixotropes, de 0 à 10 % d'additifs appropriés, comme des anti-mousses, des inhibiteurs de corrosion, des stabilisants, des agents de pénétration et des adhésifs et, comme support,

de l'eau ou un liquide organique dans lequel la matière active est peu ou pas soluble : certaines matières solides organiques ou des sels minéraux peuvent être dissous dans le support pour aider à empêcher la sédimentation ou comme antigels pour l'eau.

A titre d'exemple, voici une composition de suspension concentrée :

Exemple SC 1 :

- matière active 500 g
- phosphate de tristyrylphénol polyéthoxylé 50 g
- alkylphénol polyéthoxylé 50 g
- polycarboxylate de sodium 20 g
- éthylène glycol 50 g
- huile organopolysiloxanique (antimousse) 1 g
- polysaccharide 1,5 g
- eau 316,5 g

Les poudres mouillables (ou poudre à pulvériser) sont habituellement préparées de manière qu'elles contiennent 20 à 95 % de matière active, et elles contiennent habituellement, en plus du support solide, de 0 à 30 % d'un agent mouillant, de 3 à 20 % d'un agent dispersant, et, quand c'est nécessaire, de 0,1 à 10 % d'un ou plusieurs stabilisants et/ou autres additifs, comme des agents de pénétration, des adhésifs, ou des agents antimottants, colorants, etc...

Pour obtenir les poudres à pulvériser ou poudres mouillables, on mélange intimement les matières actives dans les mélangeurs appropriés avec les substances additionnelles et on broie avec des moulins ou autres broyeurs appropriés. On obtient par là des poudres à pulvériser dont la mouillabilité et la mise en suspension sont avantageuses ; on peut les mettre en suspension avec de l'eau à toute concentration désirée et ces suspensions sont utilisables très avantageusement en particulier pour l'application sur les feuilles des végétaux.

A la place des poudres mouillables, on peut réaliser des pâtes. Les conditions et modalités de réalisation et d'utilisation de ces pâtes sont semblables à celles des poudres mouillables ou poudres à pulvériser.

A titre d'exemple, voici diverses compositions de poudres mouillables (ou poudres à pulvériser) :

Exemple PM 1

- matière active 50%
- alcool gras éthoxylé (agent mouillant) 2,5%
- phényléthylphénol éthoxylé (agent dispersant) 5 %
- craie (support inerte) 42,5%

Exemple PM 2 :

- matière active 10%
- alcool synthétique oxo de type ramifié, en C13 éthoxylé par 8 à 10 oxyde d'éthylène (agent mouillant) 0,75%
- lignosulfonate de calcium neutre (agent dispersant) 12%
- carbonate de calcium (charge inerte) q.s.p. 100 %

Exemple PM 3 :

Cette poudre mouillable contient les mêmes ingrédients que dans l'exemple précédent, dans les proportions ci-après :

- matière active 75 %
- agent mouillant 1,50%
- agent dispersant 8%

- carbonate de calcium (charge inerte) q.s.p. 100%

Exemple PM 4 :

- matière active 90%
- alcool gras éthoxylé (agent mouillant) 4%
- phényléthylphénol éthoxylé (agent dispersant) 6%

Exemple PM 5 :

- matière active 50%
- mélange de tensio-actifs anioniques et non ioniques (agent mouillant) 2,5%
- lignosulfonate de sodium (agent dispersant) 5 %
- argile kaolinique (support inerte) 42,5%

Les dispersions et émulsions aqueuses, par exemple les compositions obtenues en diluant à l'aide d'eau une poudre mouillable ou un concentré émulsionnable selon l'invention, sont comprises dans le cadre général de la présente invention. Les émulsions peuvent être du type eau-dans-l'huile ou huile-dans-l'eau et elles peuvent avoir une consistance épaisse comme celle d'une "mayonnaise".

Les compositions fongicides selon l'invention peuvent être formulées sous la forme de granulés dispersibles dans l'eau également compris dans le cadre de l'invention.

Ces granulés dispersibles, de densité apparente généralement comprise entre environ 0,3 et 0,6 ont une dimension de particules généralement comprise entre environ 150 et 2000 et de préférence entre 300 et 1500 microns.

La teneur en matière active de ces granulés est généralement comprise entre environ 1 % et 90 %, et de préférence entre 25 % et 90 %.

Le reste du granulé est essentiellement composé d'une charge solide et éventuellement d'adjuvants tensio-actifs conférant au granulé des propriétés de dispersibilité dans l'eau. Ces granulés peuvent être essentiellement de deux types distincts selon que la charge retenue est soluble ou non dans l'eau.

Lorsque la charge est hydrosoluble, elle peut être minérale ou, de préférence, organique. On a obtenu d'excellents résultats avec l'urée. Dans le cas d'une charge insoluble, celle-ci est de préférence minérale, comme par exemple le kaolin ou la bentonite. Elle est alors avantageusement accompagnée d'agents tensio-actifs (à raison de 2 à 20 % en poids du granulé) dont plus de la moitié est, par exemple, constituée par au moins un agent dispersant, essentiellement anionique, tel qu'un polynaphtalène sulfonate alcalin ou alcalino terreux ou un lignosulfonate alcalin ou alcalino-terreux, le reste étant constitué par des mouillants non ioniques ou anioniques tel qu'un alcoyl naphtalène sulfonate alcalin ou alcalino-terreux.

Par ailleurs, bien que cela ne soit pas indispensable, on peut ajouter d'autres adjuvants tels que des agents anti-mousse.

Le granulé selon l'invention peut être préparé par mélange des ingrédients nécessaires puis granulation selon plusieurs techniques en soi connues (drageoir, lit fluide, atomiseur, extrusion, etc...). On termine généralement par un concassage suivi d'un tamisage à la dimension de particule choisie dans les limites mentionnées ci-dessus. On peut encore utiliser des granulés obtenus comme précédemment puis imprégnés avec une composition contenant la matière active.

De préférence, il est obtenu par extrusion, en opérant comme indiqué dans les exemples ci-après.

Exemple GD1 : Granulés dispersibles

Dans un mélangeur, on mélange 90 % en poids de matière active et 10 % d'urée en perles. Le mélange est ensuite broyé dans un broyeur à broches. On obtient une poudre que l'on humidifie avec environ 8 % en poids d'eau. La poudre humide est extrudée dans une extrudeuse à rouleau perforé. On obtient un granulé qui est séché, puis concassé et tamisé, de façon à ne garder respectivement que les granulés d'une dimension comprise entre 150 et 2000 microns.

Exemple GD2 : Granulés dispersibles

Dans un mélangeur, on mélange les constituants suivants :

- matière active 75%
- agent mouillant (alkylnaphtalène sulfonate de sodium) 2%
- agent dispersant (polynaphtalène sulfonate de sodium) 8%
- charge inerte insoluble dans l'eau (kaolin) 15%

Ce mélange est granulé en lit fluide, en présence d'eau, puis séché, concassé et tamisé de manière à obtenir des granulés de dimension comprise entre 0,15 et 0,80 mm.

Ces granulés peuvent être utilisés seuls, en solution ou dispersion dans de l'eau de manière à obtenir la dose cherchée. Ils peuvent aussi être utilisés pour préparer des associations avec d'autres matières actives, notamment fongicides, ces dernières étant sous la forme de poudres mouillables, ou de granulés ou suspensions aqueuses.

En ce qui concerne les compositions adaptées au stockage et au transport, elles contiennent plus avantageusement de 0,5 à 95 % (en poids) de matière active.

L'invention a enfin pour objet un procédé de lutte, à titre curatif ou préventif, contre les champignons phytopathogènes des cultures, caractérisé en ce que l'on applique sur les parties aériennes des végétaux une quantité efficace et non phytotoxique d'une composition fongicide selon l'invention.

Les champignons phytopathogènes des cultures qui peuvent être combattus par ce procédé sont notamment ceux :

- du groupe des oomycètes :
  - du genre *Phytophthora* tel que *Phytophthora infestans* (mildiou des solanées, notamment de la pomme de terre ou de la tomate), *Phytophthora citrophthora, Phytophthora capsici, Phytophthora cactorum, Phytophthora palmivora, Phytophthora cinnamoni, Phytophthora megasperma, Phytophthora parasitica,*
  - de la famille des Péronosporacées, notamment *Plasmopara viticola* ( mildiou de la vigne), *Plasmopara halstedei* (mildiou du tournesol), *Pseudoperonospora sp* (notamment mildiou des cucurbitacees et du houblon), *Bremia lactucae* (mildiou de la laitue), *Peronospora tabacinae* (mildiou du tabac),
- du groupe des adélomycètes :
  - du genre *Alternaria,* par exemple *Alternaria solani* (alternariose des solanées, et notamment de la tomate et des pommes de terre ),
  - du genre *Guignardia,* notamment *Guignardia bidwelli* (black rot de la vigne),
  - du genre *Oïdium,* par exemple oïdium de la vigne *(Uncinula necator) ;* oïdium des cultures légumières, par exemple *Erysiphe polygoni* (oidium des crucifères) ; *Leveillula taurica, Erysiphe cichoracearum, Sphaerotheca fuligena;* (oïdium des cucurbitacées, des composées, de la tomate) ; *Erysiphe communis* (oïdium de la betterave et du chou) ; *Erysiphe pisi* (oïdium du pois, de la luzerne) ; *Erysiphe polyphaga* (oïdium du haricot et du concombre) ; *Erysiphe umbelliferarum* (oïdium des ombellifères, notamment de la carotte) ; *Sphaerotheca humuli* (oïdium du houblon) ; *Erysiphe graminis* (oïdium des céréales).
  - du genre *Septoria,* par exemple *Septoria nodorum* ou *Septoria tritici* (septoriose des céréales) ;
- du groupe des Basidiomycètes :
  - du genre *Puccinia,* par exemple *Puccinia recondita* ou *striiformis* (rouilles du blé).

La composition fongicide objet de l'invention est appliquée au moyen de différents procédés de traitement tels que :

- la pulvérisation sur les parties aériennes des cultures à traiter d'un liquide comprenant ladite composition,
- le poudrage, l'incorporation au sol de granulés ou de poudres, l'arrosage, l'injection dans les arbres ou le badigeonnage.

La pulvérisation d'un liquide sur les parties aériennes des cultures à traiter est le procédé de traitement préféré.

Par "quantité efficace et non phytotoxique", on entend une quantité de composition selon l'invention suffisante pour permettre le contrôle ou la destruction des champignons présents ou susceptibles d'apparaître sur les cultures,

et n'entraînant pour lesdites cultures aucun symptôme de phytotoxicité. Une telle quantité est susceptible de varier dans de larges limites selon le champignon à combattre, le type de culture, les conditions climatiques, et la nature du composé B compris dans la composition fongicide selon l'invention. Cette quantité peut être déterminé par des essais systématiques au champ, à la portée de l'homme du métier.

Dans les conditions usuelles de la pratique agricole, des doses de composition fongicide selon l'invention par volume de liquide de pulvérisation allant de 1 g/hl à 500 g/hl, correspondant sensiblement à des doses par hectare comprises entre 10 g/ha et 5000 g/ha donnent généralement de bons résultats.

Les exemples suivants sont donnés à titre purement illustratif de l'invention, qu'ils ne limitent en aucune façon.

Dans ces exemples, le composé A utilisé est la (4-S) 4-méthyl-2-méthylthio-4-phényl-1-phénylamino-2-imidazoline-5-one.

Dans les figures jointes au présent texte, la dose de chaque matière active prise isolément, requise pour le contrôle du champignon phytopathogène au niveau indiqué, est comparée avec celle des 2 matières actives prises en mélange. La dose efficace de chaque matière active prise isolément est indiquée sur l'axe des abscisses et des ordonnées et une ligne droite est tracée coupant ces 2 axes et reliant ces 2 doses. Lorsqu'une matière active prise isolément n'est pas efficace (par exemple le fosetyl-Al dans la figure 1) la ligne droite est parallèle à l'axe des coordonnées qui indique les doses de cette matière active. En ce qui concerne les 2 matières actives prises en mélange, la dose du mélange à un ratio donné est indiquée par un point. Une droite est tracée entre ce point et l'origine du système d'axe, de sorte que le ratio des matières actives peut être indiqué commodément pour chaque ratio testé.

Exemple 1 : Essai in vivo de l'association de A avec le phoséthyl-Al sur *Phytophthora infestans* (mildiou de la tomate) par traitement préventif à 48 heures

On prépare une suspension de 60 mg comprenant les composés A et B dans un mélange liquide constitué de 0,3 ml d' un agent tensioactif (oléate de dérivé polyoxyéthyléné du sorbitan) dilué à 10% dans l'eau et de 60 ml d'eau.

Le composant B est le phoséthyl-Al ; le rapport A/B est 0,05 - 0,1 - 1.

Des plants de tomate (variété Marmande) sont cultivés dans des godets. Lorsque ces plants sont agés d'un mois (stade 5 à 6 feuilles, hauteur 12 à 15 cm), ils sont traités par pulvérisation de la suspension ci-dessus.

Au bout de 48 heures, on contamine chaque plant par pulvérisation au moyen d'une suspension aqueuse de spores (30000 sp/$cm^3$) de *Phytophthora infestans.*

Après cette contamination, les plants de tomate sont mis en incubation pendant 7 jours à 20°C environ en atmosphère saturée d'humidité.

La lecture se fait 7 jours après la contamination, en comparaison avec les plants témoins.

Les résultats obtenus sont reportés sous forme de points, correspondant à 90% de destruction du parasite et placés dans un diagramme de Tammes qui comporte en abcisse les doses de A exprimées en mg/l et en ordonnée les doses de B également en mg/l.

On obtient le diagramme de la figure 1 dans lequel il apparaît que le Phoséthyl-Al n'a, lorsqu'il est appliqué seul, aucune efficacité dans les conditions de l'essai. Il apparaît cependant que l'addition de Phoséthyl-Al permet, de façon parfaitement inattendue, d'abaisser la dose de A nécessaire à la destruction de 90 % du parasite en dessous de 309 mg/l qui correspond à la dose de A seul qu'il est nécessaire d'appliquer pour obtenir le même pourcentage de destruction.

La disposition des points obtenue indique donc un effet unilatéral, qualifié en langue anglaise selon la méthode de Tammes citée précédemment de "one sided effect". Cette disposition correspond à une isobole de type II selon ladite méthode (page 74 de la référence bibliographique correspondante déjà citée) et est caractéristique d'une synergie.

Exemple 2 : Essai in vivo de l'association de A avec le phoséthyl-Al sur *Plasmopara viticola* (mildiou de la vigne) par traitement préventif à 72 heures

On prépare une suspension de 60 mg comprenant les composés A et B dans un mélange liquide constitué de 0,3 ml d' un agent tensioactif (oléate de dérivé polyoxyéthyléné du sorbitan) dilué à 10% dans l'eau et de 60 ml d'eau.

Le composant B est le phoséthyl-Al ; le rapport A/B est 0,002 - 0,004 - 0,02.

Des boutures de vigne (Vitis vinifera), variété Chardonnay, sont cultivées dans des godets. Lorsque ces plants sont âgés de 2 mois (stade 8 à 10 feuilles, hauteur de 10 à 15 cm ), ils sont traités par pulvérisation au moyen de la suspension ci-dessus.

Des plants utilisés comme témoins sont traités par une suspension similaire mais ne contenant pas de matière active ("blanc de formulation ).

Après séchage pendant 72 heures, on contamine chaque plant par pulvérisation d'une suspension aqueuse de spores de *Plasmopara viticola* obtenue à partir de feuilles sporulées contaminées 7 jours auparavant. Ces spores

sont mises en suspension à raison de 100 000 unités par $cm^3$.

Les plants contaminés sont ensuite mis en incubation pendant deux jours à 18°C environ, en atmosphère saturée d'humidité puis pendant 5 jours à 20-22°C sous 90-100% d'humidité relative.

La lecture se fait 7 jours après la contamination, en comparaison avec les plants témoins.

Les résultats obtenus sont reportés sous forme de points, correspondant à 90% de destruction du parasite et placés dans un diagramme d' isobole de Tammes qui comporte en abcisse les doses de A exprimées en mg/l et en ordonnée les doses de B également en mg/l.

On obtient le diagramme de la figure 2 dans lequel il apparaît que le Phoséthyl-Al n'a, lorsqu'il est appliqué seul, aucune efficacité dans les conditions de l'essai. Il apparaît cependant que l'addition de Phoséthyl-Al permet, de façon parfaitement inattendue, d'abaisser la dose de A nécessaire à la destruction de 90 % du parasite en dessous de 20 mg/1 qui correspond à la dose de A seul qu'il est nécessaire d'appliquer pour obtenir le même pourcentage de destruction.

La disposition des points obtenue indique donc un effet unilatéral, qualifié en langue anglaise selon la méthode de Tammes citée précédemment de "one sided effect". Cette disposition correspond à une isobole de type II selon ladite méthode (page 74 de la référence bibliographique correspondante déjà citée) et est caractéristique d'une synergie.

Exemple 3 : Essai in vivo de l'association de A avec le mancozèbe sur *Plasmopara viticola* (mildiou de la vigne) par traitement préventif à 24 heures

On répète l'exemple 2 en utilisant comme composant B le mancozèbe, en adoptant des concentrations de A et B dans la suspension de traitement des plants égales respectivement à 3,2 et 12,5 mg/l, et enfin en procédant à la contamination 24 heures après le traitement.

L'efficacité mesurée, ainsi que l'efficacité des produits A et B seuls mesurée dans les mêmes conditions, est indiquée dans le tableau ci-dessous.

| | Dose (en mg/l) | Efficacité (en %) |
|---|---|---|
| composé A | 3,2 | 80,8 |
| mancozèbe | 12,5 | 0 |
| composé A + mancozèbe | 3,2 + 12,5 | 90,4 |

Exemple 4 : Essai in vivo de l'association de A avec le cymoxanil sur *Phytophthora infestans* (mildiou de la tomate) par traitement préventif à 48 heures

On répète l'exemple 1 en utilisant comme composant B le cymoxanil, en adoptant des rapports A/B dans la suspension de traitement des plants égaux à 0,25 - 0,5 - 2 - 4.

On obtient le diagramme de la figure 3 qui montre une disposition des points analogue à l'exemple 1, caractéristique d'une synergie.

Exemple 5 : Essai in vivo de l'association de A avec le N-méthyl-N-éthyl-2-(3,4-diméthoxyphényl)-4-trifluorométhylbenzamide sur *Phytophthora infestans* (mildiou de la tomate) par traitement préventif à 48 heures

On répète l'exemple 1 en utilisant comme composant B le N-méthyl-N-éthyl-2-(3,4-diméthoxyphényl)-4-trifluorométhylbenzamide, et en adoptant des rapports A/B dans la suspension de traitement des plants égaux à 0,25 - 0,5 - 1 - 2 - 4.

Les résultats obtenus sont reportés sous forme de points, correspondant à 90% de destruction du parasite et placés dans un diagramme de Tammes qui comporte en abcisse les doses de A exprimées en mg/l et en ordonnée les doses de B également en mg/l.

On obtient le diagramme de la figure 4 dans lequel il apparaît que l'addition d'une dose de A inférieure à 163 mg/l (qui correspond à la dose de A seul qu'il est nécessaire d'appliquer pour obtenir la destruction de 90 % du parasite) permet, de façon parfaitement inattendue, d'abaisser la dose de B nécessaire à la destruction de 90 % du parasite en dessous de 166 mg/1 (cette valeur correspondant à la dose de B seul qu'il est nécessaire d'appliquer pour obtenir ce même pourcentage de destruction).

La disposition des points obtenue indique donc un effet bilatéral, qualifié en langue anglaise selon la méthode de Tammes citée précédemment de "two sided effect". Cette disposition correspond à une isobole de type III selon ladite méthode (page 75 de la référence bibliographique correspondante déjà citée) et est caractéristique d'une synergie.

Exemple 6 : Essai in vivo de l'association de A avec le diméthomorphe sur *Phytophthora infestans* (mildiou de la tomate) par traitement préventif à 48 heures

On répète l'exemple 1 en utilisant comme composant B le diméthomorphe, et en adoptant des rapports A/B dans la suspension de traitement des plants égaux à 0,25 - 0,5 - 1.

On obtient le diagramme de la figure 5 dans lequel la disposition des points est analogue à celle obtenue pour l'exemple 5 et est caractéristique d'une synergie.

Exemple 7 : Essai in vivo de l'association de A avec l'oxadixyl sur *Plasmopara viticola* (mildiou de la vigne, souche sensible aux phénylamides) par traitement curatif à 48 heures

On prépare une suspension de 60 mg comprenant les composés A et B dans un mélange liquide constitué de 0,3 ml d' un agent tensioactif (oléate de dérivé polyoxyéthyléné du sorbitan) dilué à 10% dans l'eau et de 60 ml d'eau.

Le composant B est l'oxadixyl ; le rapport A/B est 0,5 - 1 - 2 - 4..

Des boutures de vigne (Mitis vinifera), variété Chardonnay, sont cultivées dans des godets. Lorsque ces plants sont âgés de 2 mois (stade 8 à 10 feuilles, hauteur de 10 à 15 cm ), ils sont contaminés par pulvérisation d'une suspension aqueuse de spores de *Plasmopara viticola* obtenue à partir de feuilles sporulées contaminées 7 jours auparavant. Ces spores sont mises en suspension à raison de 100 000 unités par $cm^3$.

Les plants contaminés sont ensuite traités 48 heures après contamination par pulvérisation au moyen de la suspension de produit fongicide préparée ci-dessus

Des plants utilisés comme témoins sont traités par une suspension similaire mais ne contenant pas de matière active ("blanc de formulation ).

Les plants contaminés puis traités sont ensuite mis en incubation pendant deux jours à 18°C environ, en atmosphère saturée d'humidité puis pendant 5 jours à 20-22°C sous 90-100% d'humidité relative.

La lecture se fait 7 jours après la contamination, en comparaison avec les plants témoins.

Les résultats obtenus sont reportés sous forme de points, correspondant à 70 % de destruction du parasite et placés dans un diagramme d' isobole de Tammes qui comporte en abcisse les doses de A exprimées en mg/l et en ordonnée les doses de B également en mg/l.

On obtient le diagramme de la figure 6 dans lequel la disposition des points est analogue à celle obtenue pour l'exemple 5 et est caractéristique d'une synergie.

Exemple 8 : Essai in vivo de l'association de A avec le chlorothalonil sur *Phytophthora infestans* (mildiou de la tomate) par traitement préventif à 48 heures

On répète l'exemple 1 en utilisant comme composé B le chlorothalonil ; le rapport A/B est 0,125 - 0,25 - 0,5 - 1 - 2. On reporte les résultats correspondant à 70 % de destruction du parasite.

On obtient le diagramme de la figure 7 qui montre une disposition des points analogue à l'exemple 5 , caractéristique d'une synergie.

Exemple 9 : Essai in vivo de l'association de A avec le diméthomorphe sur *Plasmopara viticola* (mildiou de la vigne) par traitement curatif à 48 heures

On répète l'exemple 7 en utilisant comme composé B le diméthomorphe ; le rapport A/B est 0,25 - 0,5 - 1 - 2 - 4. On reporte les résultats correspondant à 90 % de destruction du parasite.

On obtient le diagramme de la figure 8 qui montre une disposition des points analogue à l'exemple 1 , caractéristique d'une synergie.

Exemple 10 : Essai in vivo de l'association de A avec le métalaxyl sur *Phytophthora infestans* (mildiou de la tomate, souche sensible aux phénylamides) par traitement préventif à 48 heures

On répète l'exemple 1 en utilisant comme composé B le métalaxyl ; le rapport A/B est 0,25 - 0,5 - 1 - 2. On utilise une souche sensible aux phénylamides.

On obtient le diagramme de la figure 9 qui montre une disposition des points analogue à l'exemple 1 , caractéristique d'une synergie.

Exemple 11 : Essai in vivo de l'association de A avec le métalaxyl sur *Plasmopara viticola* (mildiou de la vigne) par traitement préventif à 24 heures

On répète l'exemple 2 en utilisant comme composé B le métalaxyl ; le rapport A/B est : 2 - 4 - 8. On procède à la contamination des plants de vigne 24 heures après les avoir traités par la suspension comprenant le mélange de A et de B.
On obtient le diagramme de la figure 10 qui montre une disposition des points analogue à l'exemple 5, caractéristique d'une synergie.

Exemple 12 : Essai in vivo de l'association de A avec l'acide phosphoreux sur *Phytophthora infestans* (mildiou de la tomate) par traitement préventif à 48 heures

On répète l'exemple 1 en utilisant comme composé B l'acide phosphoreux ; le rapport A/B est 0,025 - 0,05 - 0,1 - 0,2 - 1. On reporte les résultats correspondant à 70 % de destruction du parasite.
On obtient le diagramme de la figure 11 qui montre une disposition des points également analogue à l'exemple 1 , caractéristique d'une synergie.

Exemple 13 : Essai in vivo de l'association de A avec le sel de sodium de l'acide phosphoreux sur *Plasmopara viticola* (mildiou de la vigne) par traitement préventif à 24 heures

On répète l'exemple 2 en utilisant comme composé B le sel de sodium de l'acide phosphoreux ; le rapport A/B est : 0,025 - 0,05 - 0,1. On procède à la contamination des plants de vigne 24 heures après les avoir traités par la suspension comprenant le mélange de A et de B.
On obtient le diagramme de la figure 12 qui montre une disposition des points également analogue à l'exemple 2, caractéristique d'une synergie.

Exemple 14 : Essai in vivo de l'association de A avec le cymoxanil sur *Phytophthora infestans* (mildiou de la tomate) par traitement préventif à 48 heures

On répète l'exemple 1 en utilisant comme composé B le cymoxanil ; le rapport A/B est 0,25 - 0,5 - 1 - 2. On reporte les résultats correspondant à 70 % de destruction du parasite.
On obtient le diagramme de la figure 13 qui montre une disposition des points analogue à l'exemple 5 , caractéristique d'une synergie.

Exemple 15 : Essai in vivo de l'association de A avec le cymoxanil sur *Phytophthora infestans* (mildiou de la tomate) par traitement curatif à 24 heures

On prépare une suspension de 60 mg comprenant les composés A et B dans un mélange liquide constitué de 0,3 ml d' un agent tensioactif (oléate de dérivé polyoxyéthyléné du sorbitan) dilué à 10% dans l'eau et de 60 ml d'eau.
Le composant B est le cymoxanil ; le rapport A/B est 0,25 - 0,5 - 1 - 2.
Des plants de tomate (variété Marmande) sont cultivés dans des godets. Lorsque ces plants sont agés d'un mois (stade 5 à 6 feuilles, hauteur 12 à 15 cm), ils sont contaminés par pulvérisation au moyen d'une suspension aqueuse de spores (30000 sp/$cm^3$) de *Phytophthora infestans.*
Au bout de 24 heures, ces plants sont contaminés par pulvérisation de la suspension ci-dessus.
Ensuite, les plants de tomate sont mis en incubation pendant 7 jours à 20°C environ en atmosphère saturée d'humidité.
La lecture se fait 7 jours après la contamination, en comparaison avec les plants témoins.
Les résultats obtenus sont reportés sous forme de points, correspondant à 90% de destruction du parasite et placés dans un diagramme de Tammes qui comporte en abcisse les doses de cymoxanil exprimées en mg/l et en ordonnée les doses de A également en mg/l.
On obtient le diagramme de la figure 14 dans lequel la disposition des points indique un effet unilatéral caractéristique d'une synergie.

Exemple 16 : Essai in vivo de l'association de A avec le N-méthyl-N-éthyl-2-(3,4-diméthoxyphényl)-4-trifluorométhylbenzamide sur *Plasmopara viticola* (mildiou de la vigne) par traitement curatif à 48 heures

On répète l'exemple 7 en utilisant comme composant B le N-méthyl-N-éthyl-2-(3,4-diméthoxyphényl)-4-trifluorométhylbenzamide, en adoptant des rapports A/B dans la suspension de traitement des plants égaux à 0,25 - 0,5

- 1 - 4.

On obtient le diagramme de la figure 15 qui montre une disposition des points analogue à l'exemple 5, caractéristique d'une synergie.

Exemple 17 : Essai in vivo de l'association de A avec le methyl-(E)-methoximino[α-(otolyloxy)-o-tolyl]acetate sur *Plasmopara viticola* (mildiou de la vigne) par traitement préventif à 24 heures

On répète l'exemple 2 en utilisant comme composant B le methyl-(E)-methoximino[α-(otolyloxy)-o-tolyl]acetate, en adoptant des rapports A/B dans la suspension de traitement des plants égaux à 0,25 - 0,5 - 1. On procède à la contamination des plants de vigne 24 heures après les avoir traités par la suspension comprenant le mélange de A et de B.

On obtient le diagramme de la figure 16 qui montre une disposition des points analogue à l'exemple 5, caractéristique d'une synergie.

Exemple 18 : Essai in vivo de l'association de A avec le methyl-(E)-methoximino[α-(otolyloxy)-o-tolyl]acetate sur *Plasmopara viticola* (mildiou de la vigne) par traitement curatif à 48 heures

On répète l'exemple 7 en utilisant comme composé B le methyl-(E)-methoximino[α-(otolyloxy)-o-tolyl] acetate ; le rapport A/B est 0,25 - 0,5 - 1. On reporte les résultats correspondant à 90 % de destruction du parasite.

On obtient le diagramme de la figure 17 qui montre une disposition des points analogue à l'exemple 5 , caractéristique d'une synergie.

Exemple 19 : Essai in vivo de l'association de A avec le méthyl-(E)-2-{2-[6-(2-cyanophenoxy)pyrimidin-4-yloxy]phenyl}-3-methoxyacrylate sur *Phytophthora infestans* (mildiou de la tomate) par traitement préventif à 48 heures

On répète l'exemple 1 en utilisant comme composé B le méthyl-(E)-2-{2-[6-(2-cyanophenoxy)pyrimidin-4-yloxy]phenyl}-3-methoxyacrylate ; le rapport A/B est 0,25 - 0,5 - 1. On reporte les résultats correspondant à 90 % de destruction du parasite.

On obtient le diagramme de la figure 18 qui montre une disposition des points analogue à l'exemple 5, caractéristique d'une synergie.

Exemple 20 : Essai in vivo de l'association de A avec le fluazinam sur *Phytophthora infestans* (mildiou de la pomme de terre, souche sensible aux phenylamides) par traitement curatif à 24 heures

On répète l'exemple 15 en utilisant des plants de pomme de terre (variété Bintje) et en prenant comme composé B le fluazinam ; le rapport A/B est 0,1 1 - 0,33 - 1.

On obtient le diagramme de la figure 19.

Exemple 21 : Essai in vivo de l'association de A avec l'épоxyconazole sur *Septoria nodorum* (septoriose du blé) par traitement préventif à 24 heures

On prépare une suspension concentrée aqueuse de A à 500 g/l.

Le composant B est l'époxyconazole dont on utilise une suspension concentrée aqueuse à 125 g/l.

On réalise ensuite des suspensions comprenant A et/ou B diluées dans l'eau, de manière à donner au rapport A/B les valeurs suivantes : 0,25 - 0,5. Dans tous les cas on obtient une suspension diluée homogène.

Des graines de blé de la variété Talent sont cultivées dans des godets placés dans une cellule climatique dans laquelle la température est d'environ 10°C et l'humidité relative d'environ 70%. Lorsque ces plants sont âgés de 15 jours (taille de 8 à 10 cm) ils sont traités par application d'une suspension diluée, telle que préparée ci-dessus.

Cette application est réalisée au moyen d'un système de buse pulvérisant le liquide en forme d'un cône dont l'angle au sommet est compris entre 70 et 110°C. Un tel système est qualifié de buse à jet pinceau. Ce système de buse est fixé à un chariot qui effectue un mouvement de translation par rapport aux godets disposés sur un plateau fixe.

Un tel système permet d'exprimer la dose de A et/ou B appliquée en g par hectare.

Les conditions expérimentales sont telles que le volume de suspension aqueuse diluée appliqué aux godets est de 250 l/ha.

Au bout de 24 heures, on contamine chaque plant par pulvérisation au moyen d'une suspension aqueuse de spores (500 000 sp/$cm^3$) de *Septoria nodorum.*

Après cette contamination, les plants de blé sont mis en incubation pendant 7 jours à 20°C environ.

La lecture se fait 7 jours après la contamination, en comparaison avec les plants témoins contaminés par le

parasite, mais non traités.

Les résultats obtenus sont reportés sous forme de point, correspondant à 90% de destruction du parasite et placés dans un diagramme de Tammes qui comporte en abscisse la dose d'époxyconazole, exprimée en g/ha, et en ordonnée la dose de A également en g/ha.

On obtient le diagramme de la figure 20 qui montre une disposition des points analogue à l'exemple 1, caractéristique d'une synergie.

Exemple 22 : Essai in vivo de l'association de A avec l'époxyconazole sur *Puccinia recondita* (rouille brune du blé) par traitement préventif à 24 heures

On répète l'exemple 21 en donnant au rapport A/B les valeurs suivantes : 0,1 - 0,2 - 1 - 2, et en effectuant la contamination au moyen d'une suspension aqueuse de spores (100 000 sp/$cm^3$) de *Puccinia recondita.*

La lecture se fait 10 jours après la contamination, en comparaison avec les plants témoins contaminés par le parasite, mais non traités.

On obtient le diagramme de la figure 21.

Exemple 23 : Essai in vivo de l'association de A avec l'époxyconazole sur *Septoria tritici* (septoriose du blé) par traitement préventif à 24 heures

On répète l'exemple 21 en donnant au rapport A/B les valeurs suivantes : 0,25 - 0,5 - 1 et en utilisant des graines de blé de la variété Darius.

La contamination est effectuée au moyen d'une suspension aqueuse de spores (500 000 sp/$cm^3$) de *Septoria tritici,* et l'incubation est réalisée à une température de 18°C et de 15°C la nuit pendant une période de 21 jours.

La lecture se fait 21 jours après la contamination, en comparaison avec les plants témoins contaminés par le parasite, mais non traités.

On obtient le diagramme de la figure 22 qui montre une disposition des points analogue à l'exemple 21, caractéristique d'une synergie.

Exemple 24 : Essai in vivo de l'association de A avec le propiconazole sur *Puccinia recondita* (rouille brune du blé) par traitement préventif à 24 heures

On répète l'exemple 22 en prenant pour le composé B le propiconazole dont on utilise un concentré soluble à 125 g/l, et en donnant au rapport A/B les valeurs suivantes : 0,5 - 1 - 2.

On reporte les résultats correspondant à 70 % de destruction du parasite.

On obtient le diagramme de la figure 23 qui montre une disposition des points analogue à l'exemple 5, caractéristique d'une synergie.

Exemple 25 : Essai in vivo de l'association de A avec le propiconazole sur *Septoria nodorum* (septoriose du blé) par traitement préventif à 24 heures

On répète l'exemple 21 en prenant pour le composé B le propiconazole dont on utilise un concentré soluble à 125 g/l, et en donnant au rapport A/B les valeurs suivantes : 0,5 - 1 - 2.

On obtient le diagramme de la figure 24 qui montre une disposition des points caractéristique d'une synergie.

On répète également cet exemple en donnant au rapport A/B les valeurs suivantes : 0,1 - 0,2 - 1.

On obtient le diagramme de la figure 25 qui montre une disposition des points caractéristique d'une synergie.

Exemple 26 :Essai in vivo de l'association de A avec le propiconazole sur *Septoria tritici* (septoriose du blé) par traitement préventif à 24 heures

On répète l'exemple 23 en prenant pour le composé B le propiconazole dont on utilise un concentré soluble à 125 g/l, et en donnant au rapport A/B les valeurs suivantes : 0,1 - 0,2 - 1.

On reporte les résultats correspondant à 90 % de destruction du parasite.

On obtient le diagramme de la figure 26 qui montre une disposition des points analogue à l'exemple 1, caractéristique d'une synergie.

Exemple 27 : Essai in vivo de l'association de A avec le prochloraze sur *Septoria nodorum* (septoriose du blé) par traitement préventif à 24 heures

On répète l'exemple 21 en prenant pour le composé B le prochloraze, et en réalisant des concentrés émulsionnables de A et de B à, respectivement, 150 et 320 g/l dans un mélange d'alcool benzylique et de solvant de type aromatique dans lequel a été introduit un couple de tensio-actif constitué par de l'huile de ricin éthoxylée par 33 moles d'oxyde d'éthylène et de l'alkylarylsulfonate de calcium.
On réalise les émulsions comprenant A et/ou B diluées dans l'eau, de manière à donner au rapport A/B les valeurs suivantes : 0,25 - 1 - 2. Dans tous les cas on obtient également une émulsion diluée homogène.
On obtient le diagramme de la figure 27 qui montre une disposition des points caractéristique d'une synergie.

Exemple 28 : Essai in vivo de l'association de A avec le tébuconazole sur *Septoria nodorum* (septoriose du blé) par traitement préventif à 24 heures

On répète l'exemple 21 en prenant pour le composé B le tébuconazole dont on utilise une suspension concentrée à 25 g/l, et en donnant au rapport A/B les valeurs suivantes : 0,1 - 1 - 2. Les suspensions diluées comprenant A et/ou B sont homogènes.
On obtient le diagramme de la figure 28 qui montre une disposition des points caractéristique d'une synergie.

Exemple 29 : Essai in vivo de l'association de A avec le tébuconazole sur *Puccinia recondita* (rouille brune du blé) par traitement préventif à 24 heures

On répète l'exemple 22 en prenant pour le composé B le tébuconazole dont on utilise une suspension concentrée à 25 g/l et en donnant au rapport A/B les valeurs suivantes : 0,1 - 0,2 - 1 - 2. Les suspensions diluées comprenant A et/ou B sont homogènes.
On obtient le diagramme de la figure 29 qui montre une disposition des points caractéristique d'une synergie.

## Revendications

1. Composition fongicide synergique comprenant un composé A de formule (I) :

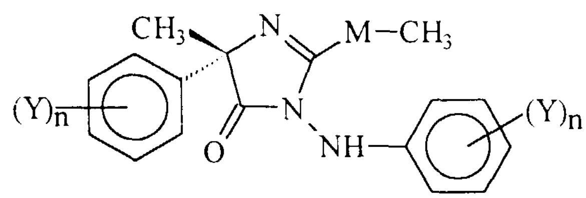

(I)

dans laquelle :

- M représente un atome d'oxygène ou de soufre ;
- n est un nombre entier égal à 0 ou 1 ;
- Y est un atome de fluor ou de chlore, ou un radical méthyle ;

et au moins un composé fongicide B choisi dans le groupe comprenant :

- les dérivés de l'acide dithiocarbamique et de ses sels comme le manèbe, le mancozèbe, le zinèbe, le métirame-zinc,
- les dérivés de l'acide phosphoreux comme les phosphites métalliques tel que le phoséthyl-Al, et l'acide phosphoreux lui-même et ses sels alcalins ou alcalino-terreux,
- les dérivés chlorés du benzène, tels que le chlorothalonil,
- les dérivés comprenant un hétérocycle renfermant de 1 à 2 atomes d'azote tels que le fluazinam, le fludioxonil, le prochloraz,

- les dérivés de triazoles tels que le bromuconazole, le cyproconazole, le difenoconazole, le diniconazole, l'epoxyconazole, le fenbuconazole, le flusilazole, le flutriafol, l'hexaconazole, le metconazole, le tebuconazole, le tetraconazole, le triticonazole,
- les dérivés dicarboximides comme le captane, le folpel, le captafol, l'iprodione, la procymidone, la vinchlozoline,
- le cuivre ou les dérivés organiques ou inorganiques du cuivre, comme l'oxychlorure de cuivre ou l'hydroxyde de cuivre,
- les amides telles que le cymoxanil, le métalaxyl, le bénalaxyl et l'oxadixyl,
- les dérivés de morpholine tels que le diméthomorphe, le dodémorphe, le tridémorphe, le fenpropimorphe, la fenpropidine, le triadimenol,
- les dérivés de type méthoxyacrylate tels que le méthyl-(E)-2-{2-[6-(2-cyanophenoxy)pyrimidin-4-yloxy]phenyl}-3-methoxyacrylate, le methyl-(E)-methoximino[$\alpha$-(o-tolyloxy)-o-tolyl]acetate, ou encore le N-methyl-(E)-methoxymino[2-(2,5-dimethyl phenoxymethyl)phenyl]acetamide,
- les dérivés de guanidine tels que la dodine,
- un dérivé de type phénylbenzamide de formule (II) :

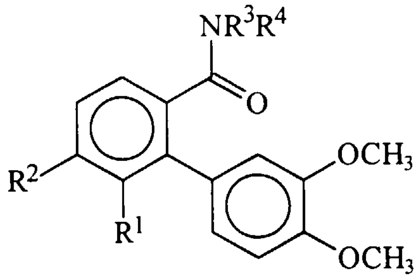

(II)

dans laquelle :

- $R^1$ et $R^2$, identiques ou différents, sont un atome d'hydrogène ou d'halogène, ou un radical alkyle éventuellement halogéné, et
- $R^3$ et $R^4$, identiques ou différents, sont un radical alkyle de 1 à 4 atomes de carbone ;

ladite composition comprenant les composants A et B dans un rapport en poids A/B , compris entre 0,0005 et 50, de préférence entre 0,001 et 10.

2. Composition fongicide selon la revendication 1 caractérisée en ce que le composé A est le composé de formule (I) dans laquelle M est un atome de soufre et n est égal à 0, encore appelé la (4-S) 4-méthyl-2-méthylthio-4-phényl-1-phénylamino-2-imidazoline-5-one.

3. Composition fongicide selon l'une des revendications 1 ou 2, caractérisée en ce que le composé B a pour signification l'un des dérivés suivants :

- un dérivé de l'acide dithiocarbamique et de ses sels choisi parmi le manèbe, le mancozèbe, le métirame-zinc,
- un dérivé de l'acide phosphoreux choisi parmi le phoséthyl-Al, et l'acide phosphoreux lui-même et ses sels de calcium ou de potassium,
- le chlorothalonil,
- un dérivé comprenant un hétérocycle renfermant de 1 à 2 atomes d'azote choisi parmi le fluazinam, le fludioxonil, le prochloraz,
- un dérivé de triazole choisi parmi le bromuconazole, le difenoconazole, l'epoxyconazole, le tebuconazole, le triticonazole,
- un dérivé dicarboximide choisi parmi le folpel ou l'iprodione,
- un dérivé du cuivre choisi parmi l'oxychlorure de cuivre ou l'hydroxyde de cuivre,
- une amide choisi parmi le cymoxanil, le métalaxyl ou l'oxadixyl,
- le diméthomorphe,
- le dérivé de type phénylbenzamide qui répond à la formule (I) dans laquelle $R^1$ représente un atome d'hydro-

gène, $R^2$ représente un radical trifluorométhyl, $R^3$ représente un radical méthyle et $R^4$ représente un radical éthyle, autrement dit le dérivé de type phénylbenzamide appelé N-méthyl-N-éthyl-2-(3,4-diméthoxyphényl)-4-trifluorométhylbenzamide.

**4.** Composition fongicide selon l'une des revendications 1 à 3, caractérisée en ce que le composé B est choisi parmi le phoséthyl Al, le mancozèbe, le cymoxanil, le diméthomorphe, l'oxadixyl ou le N-méthyl-N-éthyl-2-(3,4-diméthoxyphényl)-4-trifluorométhylbenzamide.

**5.** Composition fongicide selon l'une des revendications 1 à 4, caractérisée en ce que, lorsque le composant B est le phoséthyl-Al, le rapport A/B est compris entre 0,001 et 2, de préférence entre 0,002 et 1.

**6.** Composition fongicide selon l'une des revendications 1 à 4, caractérisée en ce que, lorsque le composant B est le N-méthyl-N-éthyl-2-(3,4-diméthoxyphényl)-4-trifluorométhylbenzamide, le rapport A/B est compris entre 0,1 et 10, de préférence entre 0,2 et 10, et de façon encore plus préférée entre 0,25 et 4.

**7.** Composition fongicide selon l'une des revendications 1 à 4, caractérisée en ce que, lorsque le composant B est le cymoxanil, le rapport A/B est compris entre 0,05 et 4, de préférence entre 0,2 et 4, et de façon encore plus préférée entre 0,25 et 4.

**8.** Composition fongicide selon l'une des revendications 1 à 4, caractérisée en ce que, lorsque le composant B est l'oxadixyl, le rapport A/B est compris entre 0,5 et 30, de préférence entre 0,5 et 10.

**9.** Composition fongicide selon l'une des revendications 1 à 4, caractérisée en ce que, lorsque le composant B est le mancozèbe, le rapport A/B est compris entre 0,02 et 2, de préférence entre 0,1 et 1.

**10.** Composition fongicide selon l'une des revendications 1 à 4, caractérisée en ce que, lorsque le composant B est le diméthomorphe, le rapport A/B est compris entre 0,1 et 2, de préférence entre 0,2 et 1.

**11.** Composition fongicide selon l'une des revendications 1 à 10, caractérisée en ce qu' elle comprend les composés A et B en mélange avec les supports solides ou liquides, acceptables en agriculture et les agents tensio-actifs également acceptables en agriculture.

**12.** Composition fongicide selon l'une des revendications 1 à 11, caractérisée en ce qu' elle comprend de 0,05 à 95 % (en poids) de matière active.

**13.** Procédé de lutte, à titre curatif ou préventif, contre les champignons phytopathogènes des cultures, caractérisé en ce que l'on applique sur les parties aériennes des végétaux une quantité efficace et non phytotoxique d'une composition fongicide selon l'une des revendications 1 à 12.

**14.** Procédé de lutte selon la revendication 13, caractérisé en ce que l'on applique 10 à 5000 g/ha de composition.

**Patentansprüche**

**1.** Synergistische fungicide Zusammensetzung, die eine Verbindung A der Formel (I):

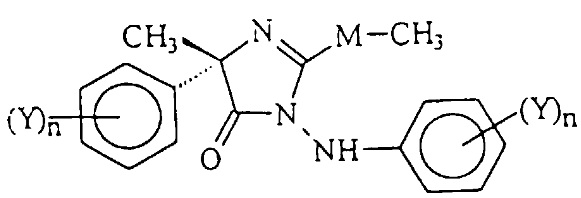

(I),

worin bedeuten:

- M ein Sauerstoffatom oder ein Schwefelatom;

- n 0 oder 1; und
- Y ein Fluor- oder Chloratom oder eine Methylgruppe,

und mindestens eine fungicide Verbindung B enthält, die ausgewählt ist unter:

- den Derivaten von Dithiocarbamidsäure und ihren Salzen, wie Maneb, Mancozeb, Zineb und Metiram,
- den Derivaten von phosphoriger Säure, wie den Metallphosphiten, beispielsweise Phosethyl-Al und phosphorige Säure selbst und ihre Alkali- oder Erdalkalisalze,
- den Chlorderivaten von Benzol, wie Chlorthalonil,
- den Derivaten, die einen Heterocyclus mit 1 bis 2 Stickstoffatomen enthalten, wie Fluazinam, Fludioxonil und Prochloraz,
- den Triazolderivaten, wie beispielsweise Bromuconazol, Cyproconazol, Difenoconazol, Diniconazol, Epoxiconazol, Fenbuconazol, Flusilazol, Flutriafol, Hexaconazol, Metconazol, Tebuconazol, Tetraconazol und Triticonazol,
- den Dicarboximidderivaten, wie Captan, Folpet, Captafol, Iprodion, Procymidone und Vinclozolin,
- Kupfer oder organischen oder anorganischen Kupferderivaten, wie Kupferoxychlorid oder Kupferhydroxid,
- den Amiden, wie Cymoxanil, Metalaxyl, Benalaxyl und Oxadixyl,
- den Morpholinderivaten, wie beispielsweise Dimethomorph, Dodemorph, Tridemorph, Fenpropimorph, Fenpropidin und Triadimenol,
- den Derivaten vom Methoxyacrylattyp, wie Methyl-(E)-2-{2-[6-(2-cyanophenoxy)pyrimidin-4-yloxy]phenyl}-3-methoxyacrylat, Methyl-(E)-methoximino[α-(o-tolyloxy)-o-tolyl]-acetat oder N-Methyl-(E)-methoximino-[2-(2,5-dimethyl-phenoxymethyl)phenyl]-acetamid,
- den Guanidinderivaten, wie Dodine, und
- den Derivaten vom Typ Phenylbenzamid der Formel (II):

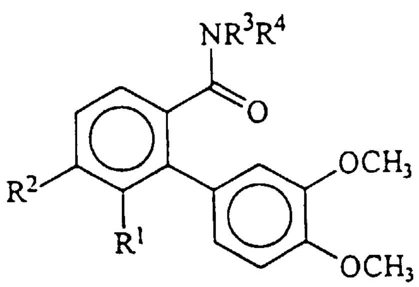

(II),

worin bedeuten:

- die Gruppen $R^1$ und $R^2$, die identisch oder voneinander verschieden sind, ein Wasserstoffatom, ein Halogenatom oder eine gegebenenfalls halogenierte Alkylgruppe, und
- die Gruppen $R^3$ und $R^4$, die identisch oder voneinander verschieden sind, eine Alkylgruppe mit 1 bis 4 Kohlenstoffatomen;

wobei die Zusammensetzung die Komponenten A und B in einem Massenverhältnis A/B im Bereich von 0,0005 bis 50 und vorzugsweise im Bereich von 0,001 bis 10 enthält.

2. Fungicide Zusammensetzung nach Anspruch 1, dadurch gekennzeichnet, daß es sich bei der Verbindung A um die Verbindung der Formel (I) handelt, worin M ein Schwefelatom und n Null bedeutet, die auch als (4-S)-4-Methyl-2-methylthio-4-phenyl-1-phenylamino-2-imidazolin-5-on bezeichnet wird.

3. Fungicide Zusammensetzung nach einem der Ansprüche 1 oder 2, dadurch gekennzeichnet, daß die Komponente B eines der folgenden Derivate bedeutet:

- ein Derivat von Dithiocarbamidsäure und ihren Salzen, das unter Maneb, Mancozeb und Metiram ausgewählt ist,
- ein Derivat von phosphoriger Säure, das unter Phosethyl-Al, phosphoriger Säure selbst und ihren Calcium- oder Kaliumsalzen ausgewählt ist,

- Chlorthalonil,
- ein Derivat, das einen Heterocyclus mit 1 bis 2 Stickstoffatomen aufweist und unter Fluazinam, Fludioxonil und Prochloraz ausgewählt ist,
- ein Triazolderivat, das unter Bromuconazol, Difenoconazol, Epoxiconazol, Tebuconazol und Triticonazol ausgewählt ist,
- ein Dicarboximidderivat, das unter Folpet oder Iprodion ausgewählt ist,
- ein Kupferderivat, das unter Kupferoxychlorid oder Kupferhydroxid ausgewählt ist,
- ein Amid, das unter Cymoxanil, Metalaxyl oder Oxadixyl ausgewählt ist,
- Dimethomorph, und
- ein Derivat vom Typ Phenylbenzamid, das der Formel (II) entspricht, worin $R^1$ Wasserstoff, $R^2$ Trifluormethyl, $R^3$ Methyl und $R^4$ Ethyl bedeutet, d.h. das Derivat vom Phenylbenzamidtyp, das als N-Methyl-N-ethyl-2-(3,4-dimethoxyphenyl)-4-trifluormethylbenzamid bezeichnet wird.

**4.** Fungicide Zusammensetzung nach einem der Ansprüche 1 bis 3, dadurch gekennzeichnet, daß die Verbindung B unter Phosethyl-A1, Mancozeb, Cymoxanil, Dimethomorph, Oxadixyl oder N-Methyl-N-ethyl-2-(3,4-dimethoxyphenyl)-4-trifluormethylbenzamid ausgewählt ist.

**5.** Fungicide Zusammensetzung nach einem der Ansprüche 1 bis 4, dadurch gekennzeichnet, daß das Verhältnis A/B im Bereich von 0,001 bis 2 und vorzugsweise im Bereich von 0,002 bis 1 liegt, wenn die Komponente B das Phosethyl-Al ist.

**6.** Fungicide Zusammensetzung nach einem der Ansprüche 1 bis 4, dadurch gekennzeichnet, daß das Verhältnis A/B im Bereich von 0,1 bis 10, vorzugsweise im Bereich von 0,2 bis 10 und noch bevorzugter im Bereich von 0,25 bis 4 liegt, wenn die Komponente B das N-Methyl-N-ethyl-2-(3,4-dimethoxyphenyl)-4-trifluormethylbenzamid ist.

**7.** Fungicide Zusammensetzung nach einem der Ansprüche 1 bis 4, dadurch gekennzeichnet, daß das Verhältnis A/B im Bereich von 0,05 bis 4, vorzugsweise im Bereich von 0,2 bis 4 und noch bevorzugter im Bereich von 0,25 bis 4 liegt, wenn die Komponente B das Cymoxanil ist.

**8.** Fungicide Zusammensetzung nach einem der Ansprüche 1 bis 4, dadurch gekennzeichnet, daß das Verhältnis A/B im Bereich von 0,5 bis 30 und vorzugsweise 0,5 bis 10 liegt, wenn die Komponente B das Oxadixyl ist.

**9.** Fungicide Zusammensetzung nach einem der Ansprüche 1 bis 4, dadurch gekennzeichnet, daß das Verhältnis A/B im Bereich von 0,02 bis 2 und vorzugsweise 0,1 bis 1 liegt, wenn die Komponente B das Mancozeb ist.

**10.** Fungicide Zusammensetzung nach einem der Ansprüche 1 bis 4, dadurch gekennzeichnet, daß das Verhältnis A/B im Bereich von 0,1 bis 2 und vorzugsweise 0,2 bis 1 liegt, wenn die Komponente B das Dimethomorph ist.

**11.** Fungicide Zusammensetzung nach einem der Ansprüche 1 bis 10, dadurch gekennzeichnet, daß sie die Verbindungen A und B im Gemisch mit in der Landwirtschaft akzeptablen, festen oder flüssigen Trägern und in der Landwirtschaft akzeptablen grenzflächenaktiven Stoffen enthält.

**12.** Fungicide Zusammensetzung nach einem der Ansprüche 1 bis 11, dadurch gekennzeichnet, daß sie 0,05 bis 95 % (Gew.-%) Wirkstoff enthält.

**13.** Verfahren zur kurativen oder protektiven Behandlung von phytopathogenen Pilzen an Kulturen, dadurch gekennzeichnet, daß auf die oberirdischen Pflanzenteile eine wirksame und nicht phytotoxische Menge einer fungiciden Zusammensetzung nach einem der Ansprüche 1 bis 12 aufgebracht wird.

**14.** Verfahren zur Behandlung nach Anspruch 13, dadurch gekennzeichnet, daß 10 bis 5000 g/ha Zusammensetzung aufgebracht werden.

## Claims

**1.** Synergistic fungicidal composition comprising a compound A of formula (I):

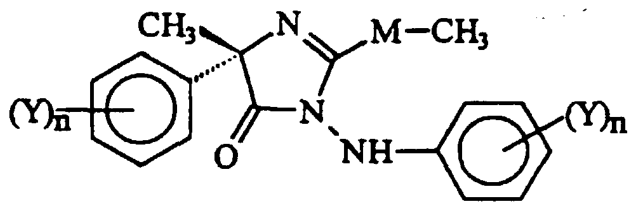

(I)

in which:

- M represents an oxygen or sulphur atom;
- n is an integer equal to 0 or 1;
- Y is a fluorine or chlorine atom, or a methyl radical;

and at least one fungicidal compound B chosen from the group comprising:

- the derivatives of dithiocarbamic acid and its salts such as maneb, mancozeb, zineb, metiram-zinc,
- the derivatives of phosphorous acid such as metallic phosphites such as fosetyl-Al, phosphorous acid itself and its alkali metal or alkaline-earth metal salts,
- the chlorinated derivatives of benzene, such as chlorothalonil,
- the derivatives comprising a heterocycle containing from 1 to 2 nitrogen atoms such as fluazinam, fludioxonil, prochloraz,
- the derivatives of triazoles such as bromuconazole, cyproconazole, difenoconazole, diniconazole, epoxyconazole, fenbuconazole, flusilazole, flutriafol, hexaconazole, metconazole, tebuconazole, tetraconazole, triticonazole,
- the dicarboximide derivatives such as captan, folpel, captafol, iprodione, procymidone, vinchlozolin,
- copper or the organic or inorganic derivatives of copper, such as copper oxychloride or copper hydroxide,
- amides such as cymoxanil, metalaxyl, benalaxyl and oxadixyl,
- the derivatives of morpholine such as dimethomorph, dodemorph, tridemorph, fenpropimorph, fenpropidin, triadimenol,
- the derivatives of the methoxyacrylate type such as methyl-(E)-2-{2-[6-(2-cyanophenoxy)pyrimidin-4-yloxy] phenyl}-3-methoxyacrylate, methyl-(E)-methoxyimino [α-(o-tolyloxy) -o-tolyl] acetate, or alternatively N-methyl-(E)-methoxyimino[2-(2,5-dimethyl phenoxymethyl)phenyl]acetamide,
- the derivatives of guanidine such as dodine,
- a derivative of the phenylbenzamide type of formula (II) :

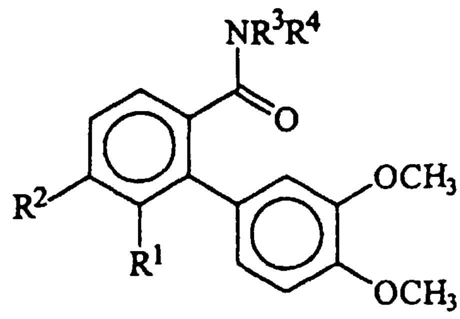

(II)

in which:

- $R^1$ and $R^2$, which are identical or different, are a hydrogen or halogen atom, or an optionally halogenated alkyl radical, and

- $R^3$ and $R^4$, which are identical or different, are an alkyl radical of 1 to 4 carbon atoms;

the said composition comprising the components A and B in a weight ratio A/B of between 0.0005 and 50, preferably of between 0.001 and 10.

**2.** Fungicidal composition according to Claim 1, characterized in that compound A is the compound of formula (I) in which M is a sulphur atom and n is equal to 0, also called (4S)-4-methyl-2-methylthio-4-phenyl-1-phenylamino-2-imidazolin-5-one.

**3.** Fungicidal composition according to either of Claims 1 or 2, characterized in that compound B has as its meaning one of the following derivatives:

- a derivative of dithiocarbamic acid and its salts chosen from maneb, mancozeb, metiram-zinc,
- a derivative of phosphorous acid chosen from fosetyl-Al, and phosphorous acid itself and its calcium or potassium salts,
- chlorothalonil,
- a derivative comprising a heterocycle containing from 1 to 2 nitrogen atoms chosen from fluazinam, fludioxonil, prochloraz,
- a triazole derivative chosen from bromuconazole, difenoconazole, epoxyconazole, tebuconazole, triticonazole,
- a dicarboximide derivative chosen from folpel or iprodione,
- a copper derivative chosen from copper oxychloride or copper hydroxide,
- an amide chosen from cymoxanil, metalaxyl or oxadixyl,
- dimethomorph,
- the derivative of the phenylbenzamide type which corresponds to the formula (I) in which $R^1$ represents a hydrogen atom, $R^2$ representsa trifluoromethyl radical, $R^3$ represents a methyl radical and $R^4$ represents an ethyl radical; in other words the derivative of the phenylbenzamide type called N-methyl-N-ethyl-2-(3,4-dimethoxyphenyl)-4-trifluoromethylbenzamide.

**4.** Fungicidal composition according to one of Claims 1 to 3, characterized in that compound B is chosen from fosetyl-Al, mancozeb, cymoxanil, dimethomorph oxadixyl or N-methyl-N-ethyl-2-(3,4-dimethoxyphenyl)-4-trifluoromethylbenzamide.

**5.** Fungicidal composition according to one of Claims 1 to 4, characterized in that when component B is fosetyl-Al, the A/B ratio is between 0.001 and 2, preferably between 0,002 and 1.

**6.** Fungicidal composition according to one of Claims 1 to 4, characterized in that when component B is N-methyl-N-ethyl-2-(3,4-dimethoxyphenyl)-4-trifluoro-methylbenzamide, the A/B ratio is between 0.1 and 10, preferably between 0.2 and 10, and still more preferably between 0.25 and 4.

**7.** Fungicidal composition according to one of Claims 1 to 4, characterized in that when component B is cymoxanil, the A/B ratio is between 0.05 and 4, preferably between 0.2 and 4, and still more preferably between 0.25 and 4.

**8.** Fungicidal composition according to one of Claims 1 to 4, characterized in that when component B is oxadixyl, the A/B ratio is between 0.5 and 30, preferably between 0.5 and 10.

**9.** Fungicidal composition according to one of Claims 1 to 4, characterized in that when component B is mancozeb, the A/B ratio is between 0.02 and 2, preferably between 0.1 and 1.

**10.** Fungicidal composition according to one of Claims 1 to 4, characterized in that when component B is dimethomorph, the A/B ratio is between 0.1 and 2, preferably between 0.2 and 1.

**11.** Fungicidal composition according to one of Claims 1 to 10, characterized in that it comprises compounds A and B in the form of a mixture with solid or liquid carriers which are agriculturally acceptable, and surface-active agents which are also agriculturally acceptable.

**12.** Fungicidal composition according to one of Claims 1 to 11, characterized in that it comprises from 0.05 to 95 % (by weight) of active substance.

**13.** Process for controlling, curatively or preventively, phytopathogenic crop fungi, characterized in that an effective and nonphytotoxic quantity of a fungicidal composition according to one of Claims 1 to 12 is applied to the aerial parts of the plants.

**14.** Control process according to Claim 13, characterized in that 10 to 5,000 g/ha of composition are applied.

**Figure 1**

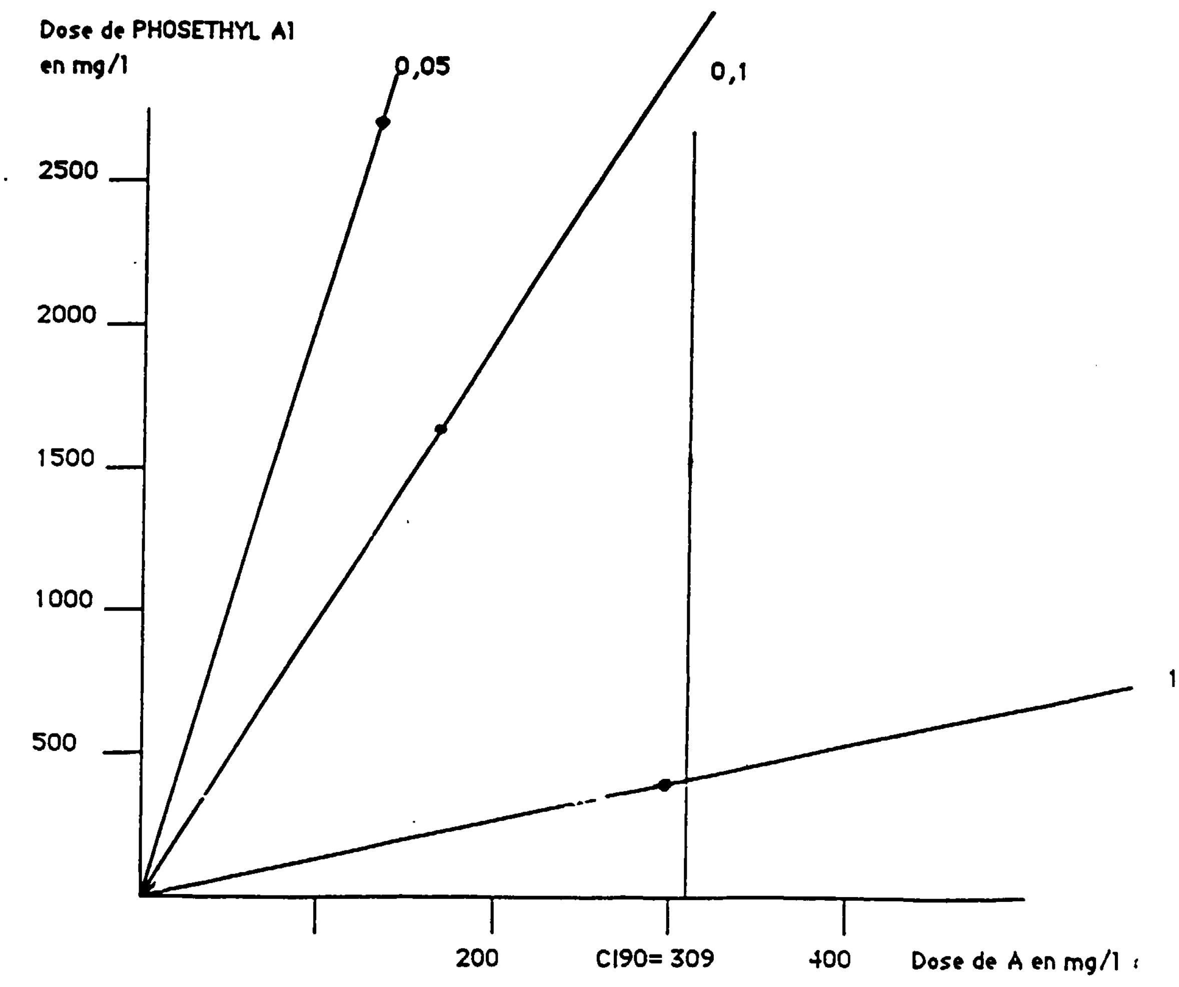
Dose de PHOSETHYL Al
en mg/l
0,05
0,1
1
2500
2000
1500
1000
500
200
CI90= 309
400
Dose de A en mg/l

**Figure 2**

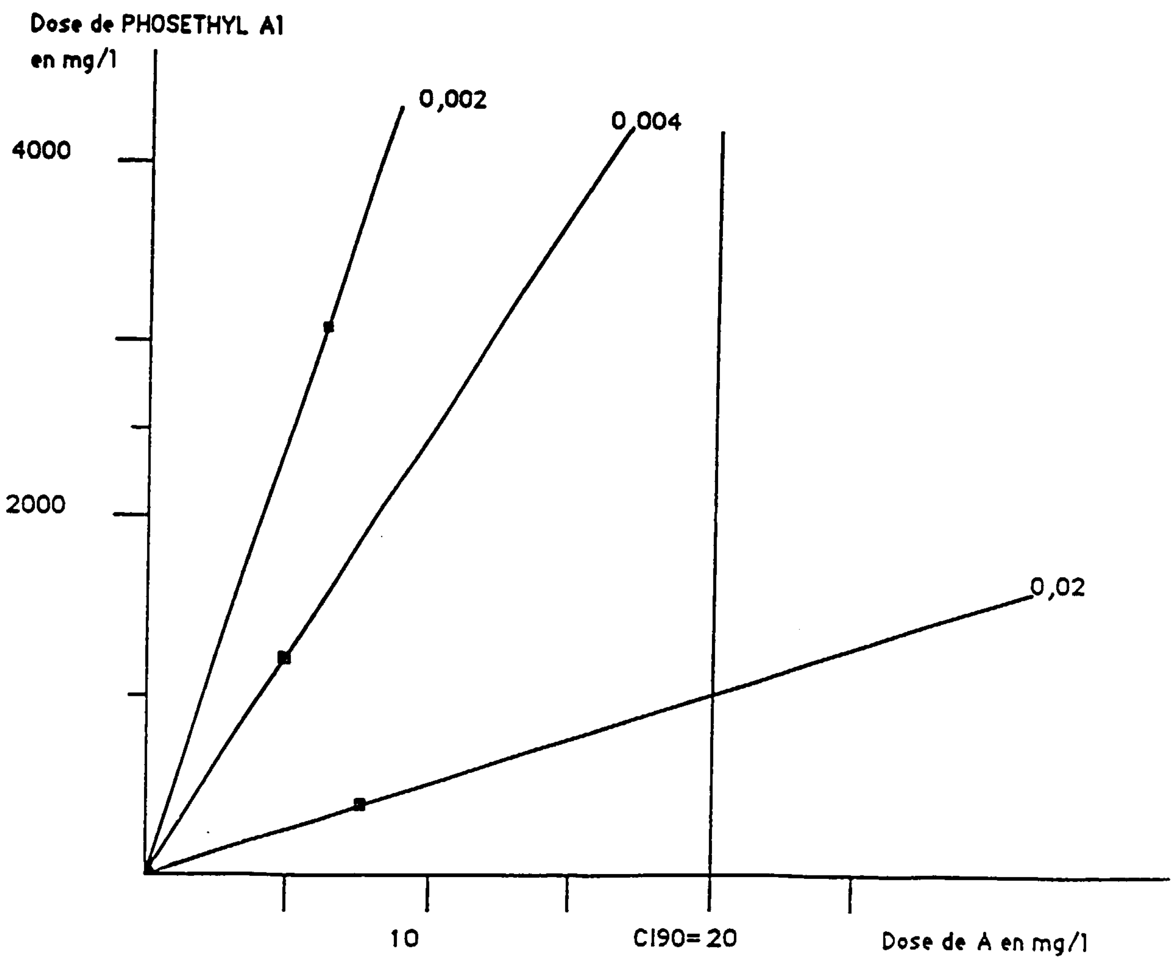
Dose de PHOSETHYL Al
en mg/l
4000
2000
0,002
0,004
0,02
10
CI90= 20
Dose de A en mg/l

**Figure 3**

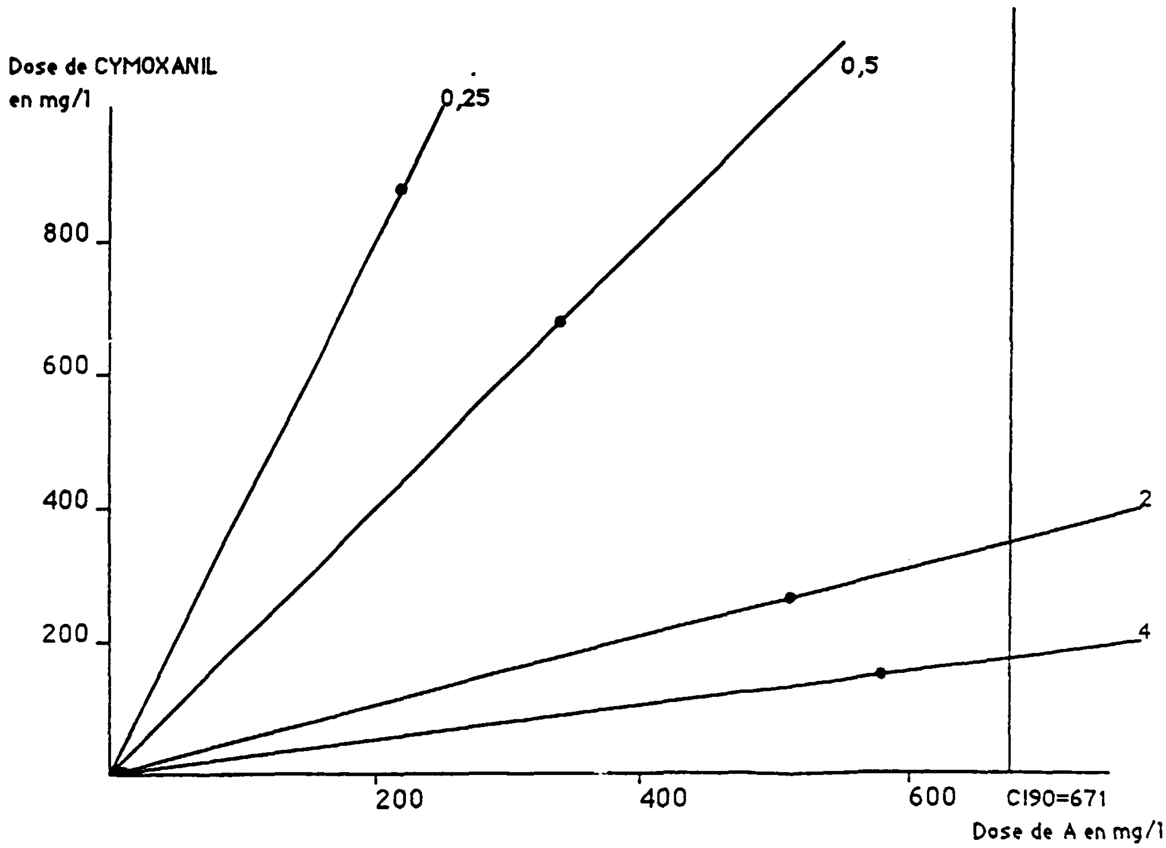
Dose de CYMOXANIL
en mg/1
800
600
400
200
200
400
600
CI90=671
Dose de A en mg/1
0,25
0,5
2
4

Figure 4

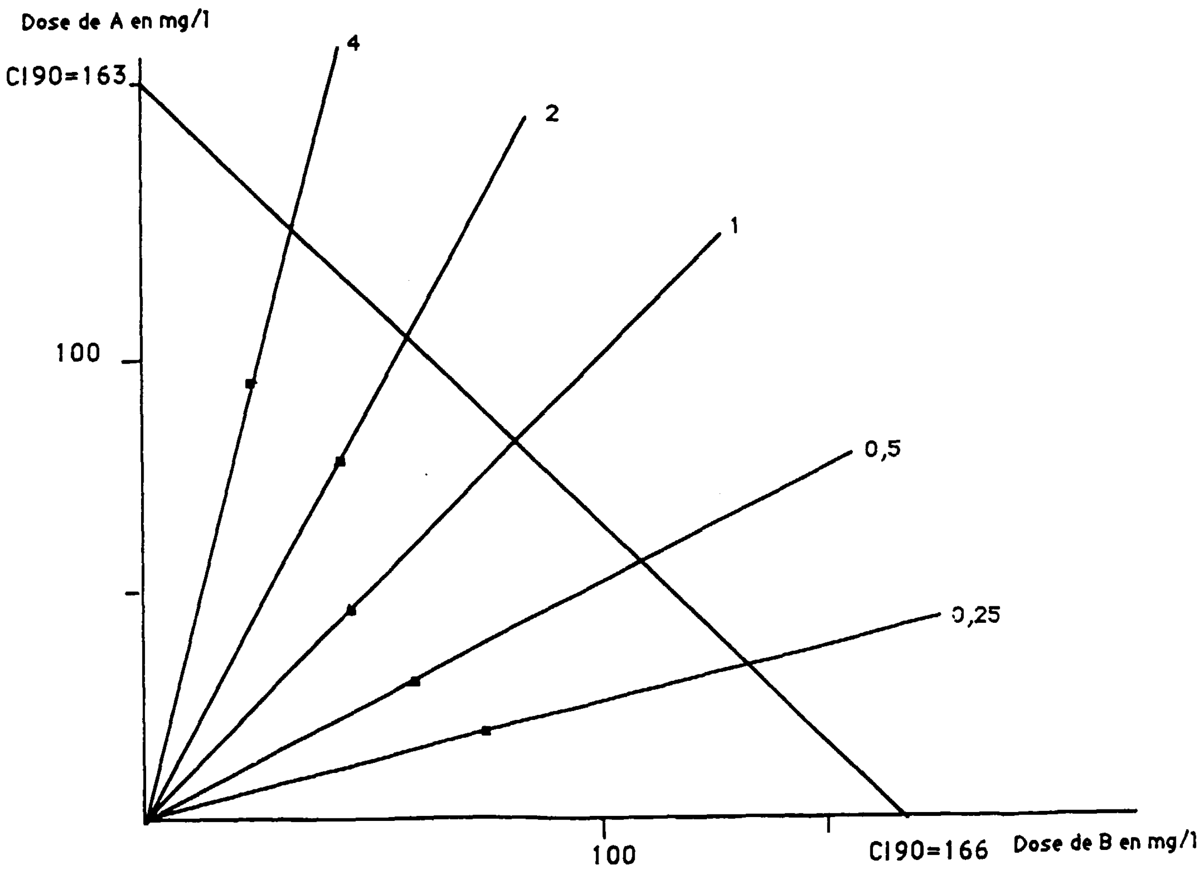
Dose de A en mg/l
CI90=163
100
4
2
1
0,5
0,25
100
CI90=166
Dose de B en mg/l

Figure 5

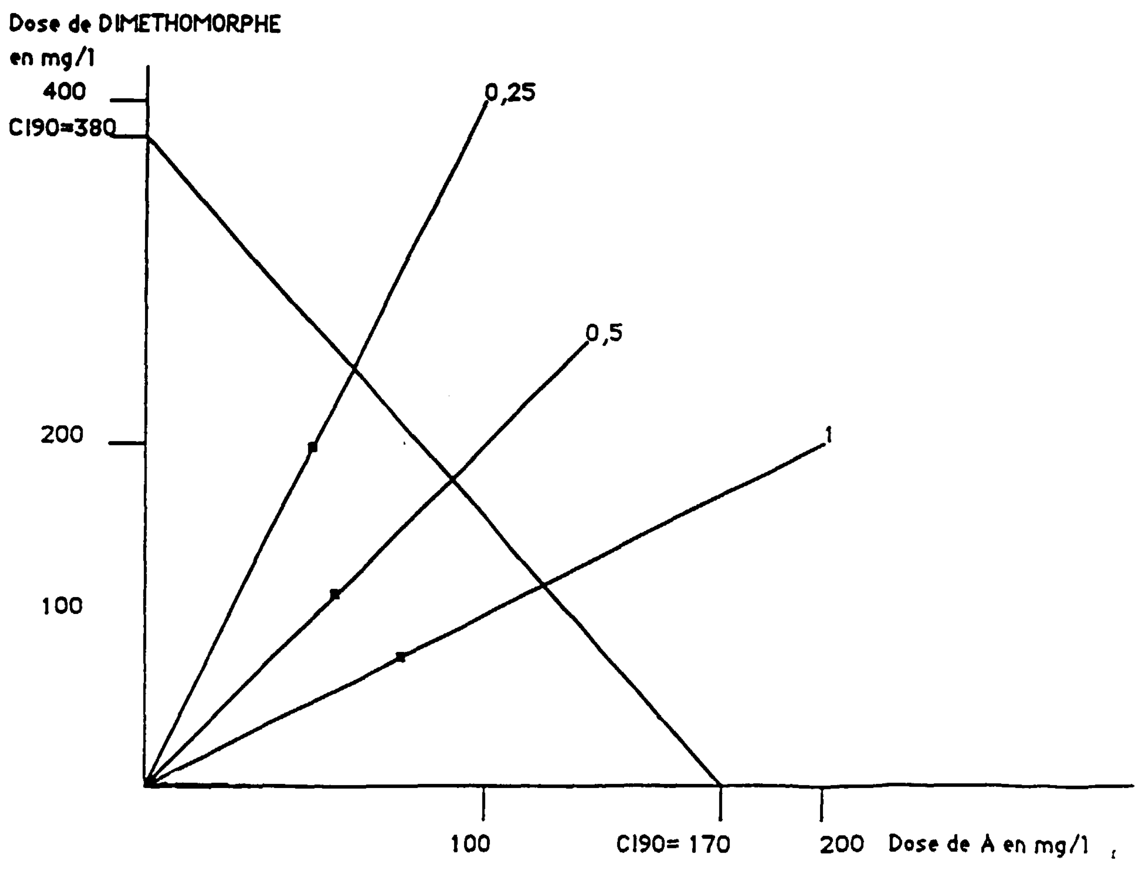
Dose de DIMETHOMORPHE
en mg/1
400
CI90=380
200
100
0,25
0,5
1
100
CI90= 170
200
Dose de A en mg/1

Figure 6

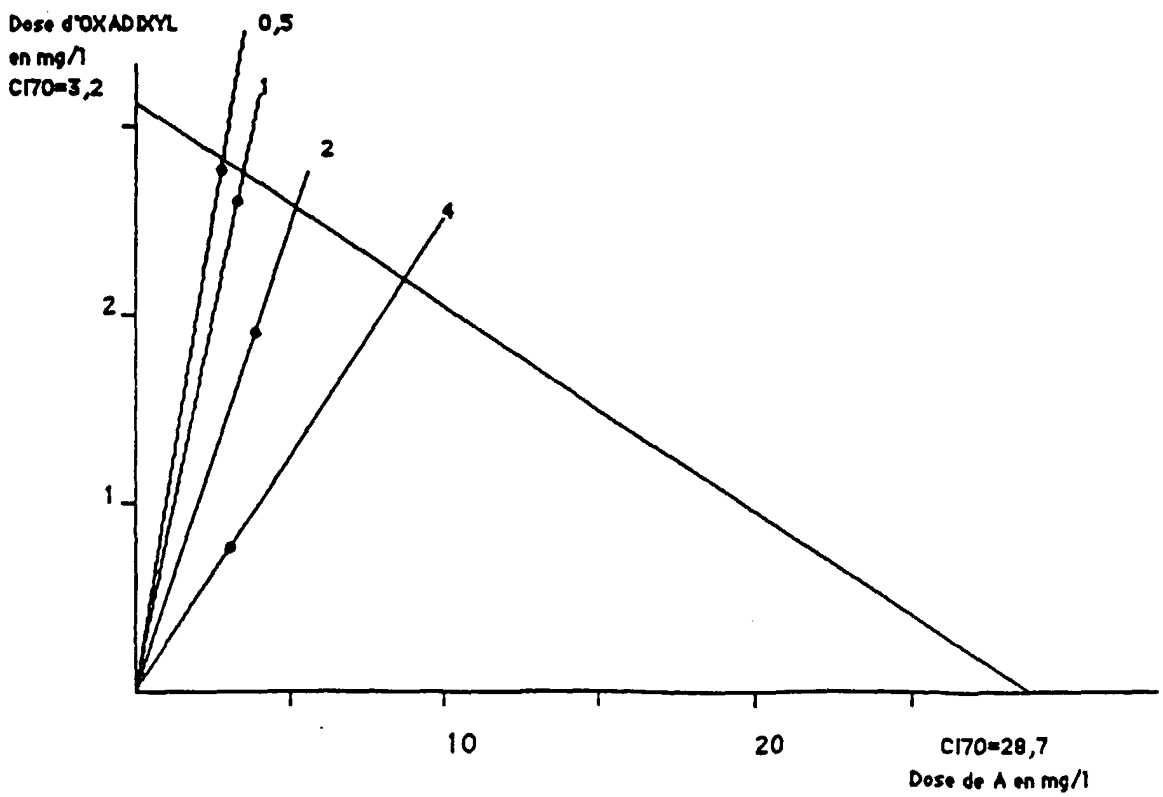
Dose d'OXADIXYL
en mg/l
CI70=3,2
0,5
1
2
4
2
1
10
20
CI70=28,7
Dose de A en mg/l

Figure 7

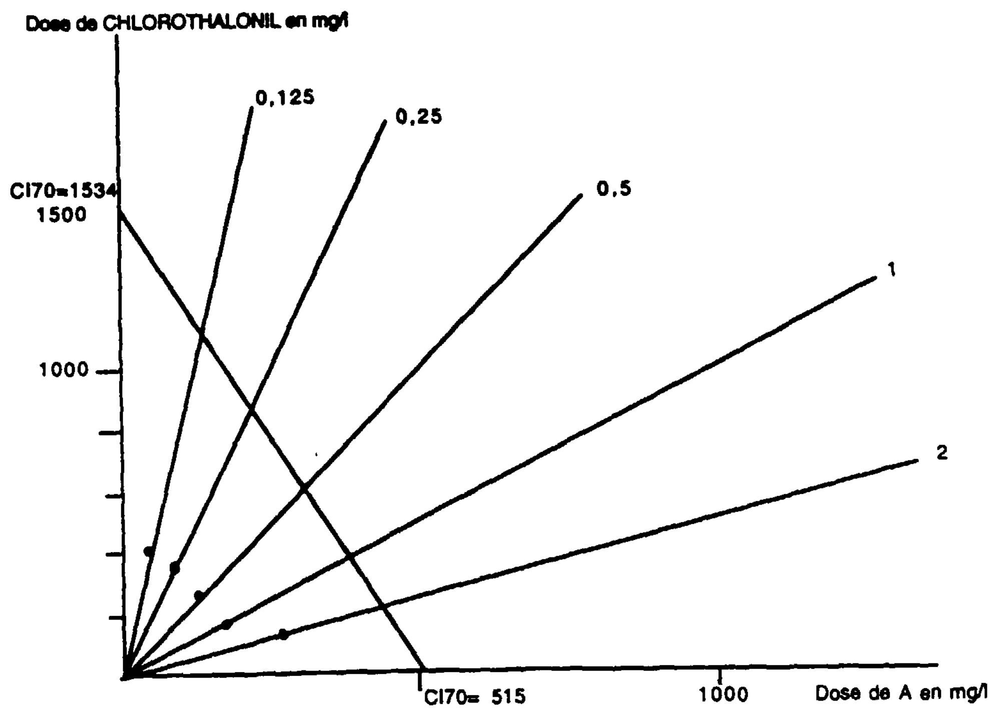
Dose de CHLOROTHALONIL en mg/l
0,125
0,25
0,5
1
2
CI70=1534
1500
1000
CI70= 515
1000
Dose de A en mg/l

Figure 8

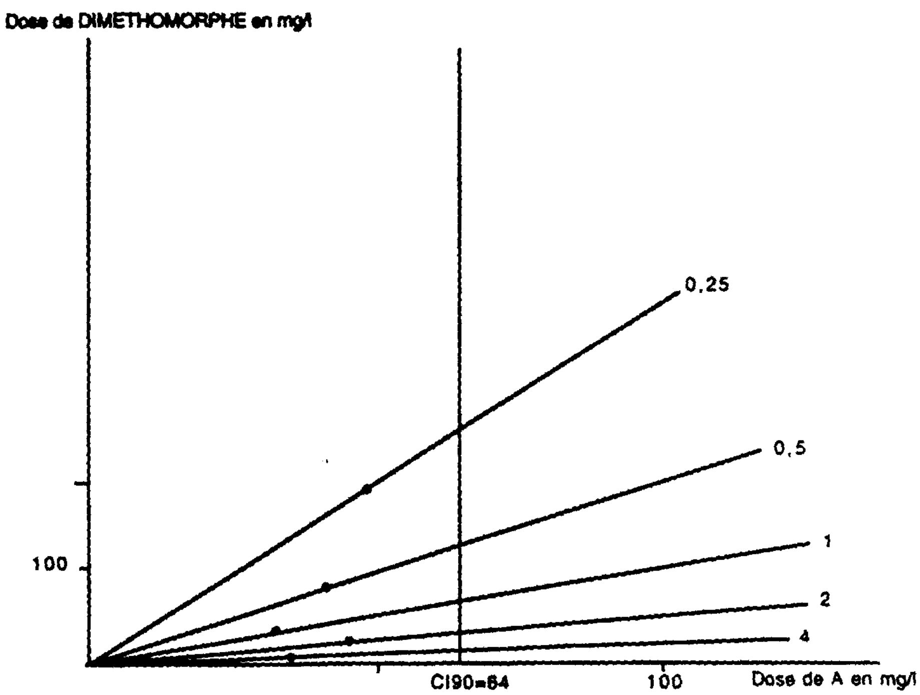
Dose de DIMETHOMORPHE en mg/l
0,25
0,5
1
2
4
100
CI90=64
100
Dose de A en mg/l

Figure 9

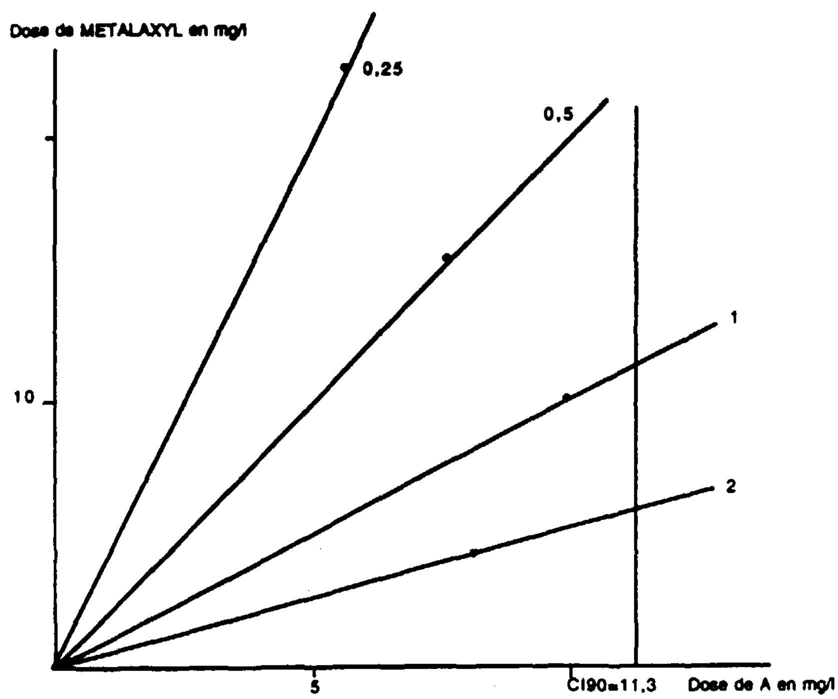

Figure 10

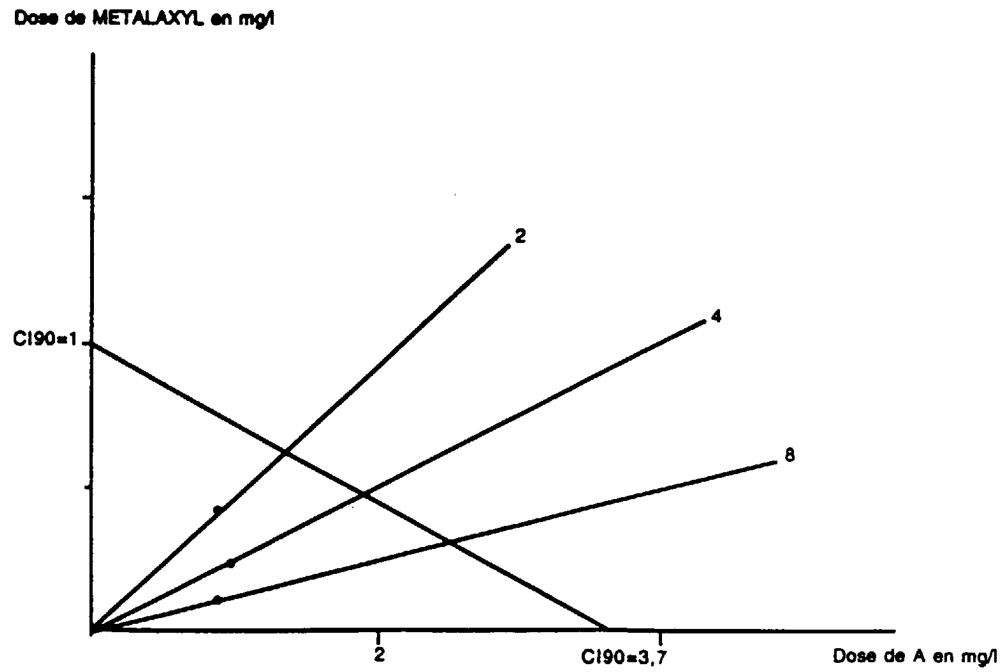

## Figure 11

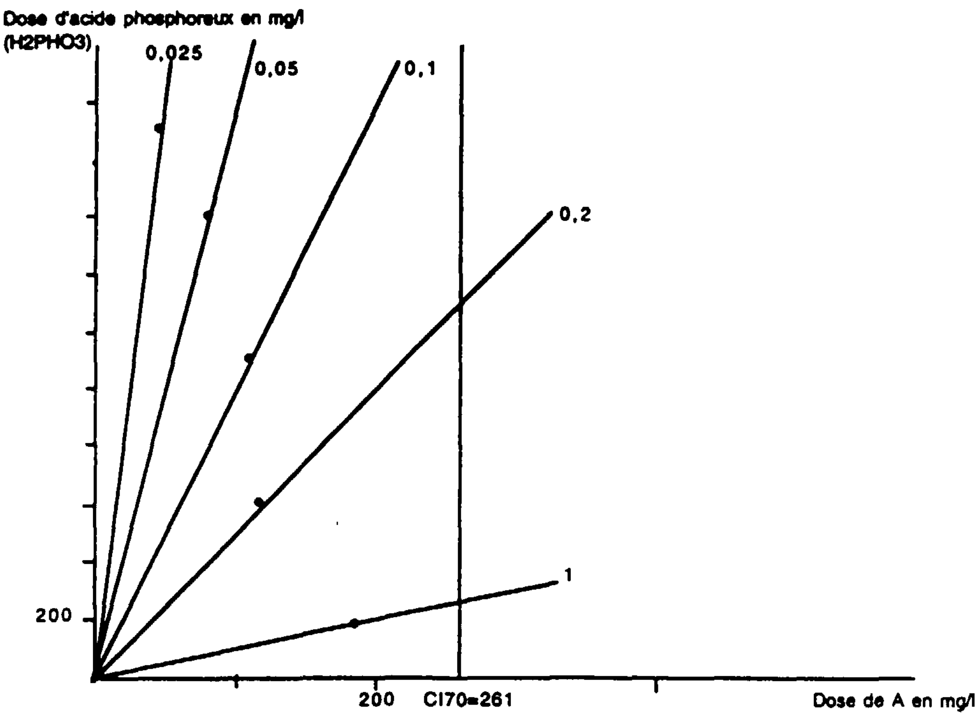

Dose d'acide phosphoreux en mg/l
(H2PHO3)
0,025
0,05
0,1
0,2
1
200
200
CI70=261
Dose de A en mg/l

Figure 12

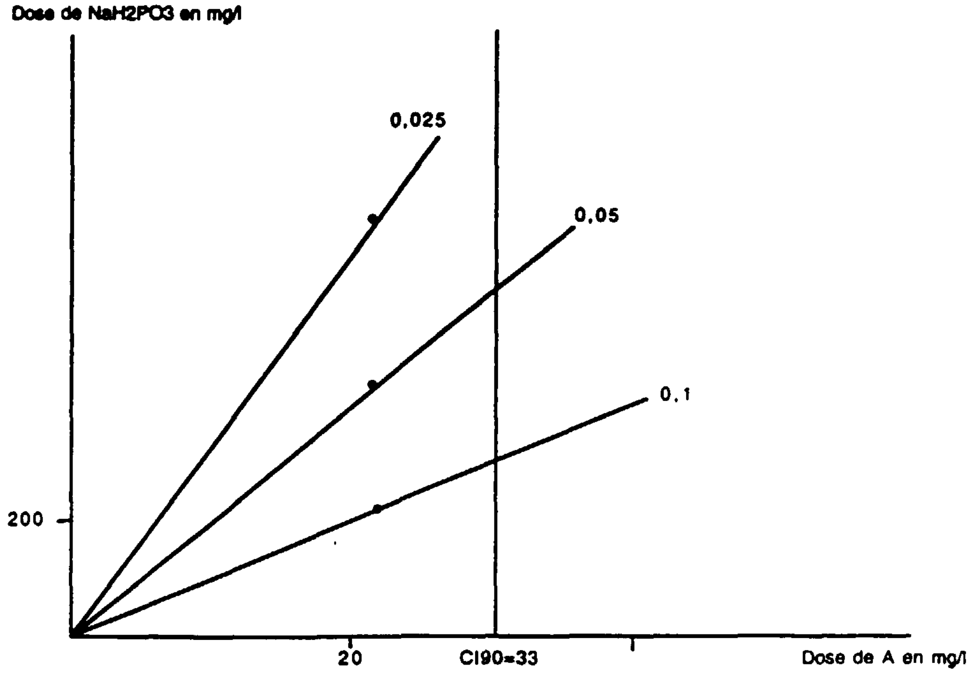
Dose de NaH2PO3 en mg/l
0,025
0,05
0,1
200
20
CI90=33
Dose de A en mg/l

Figure 13

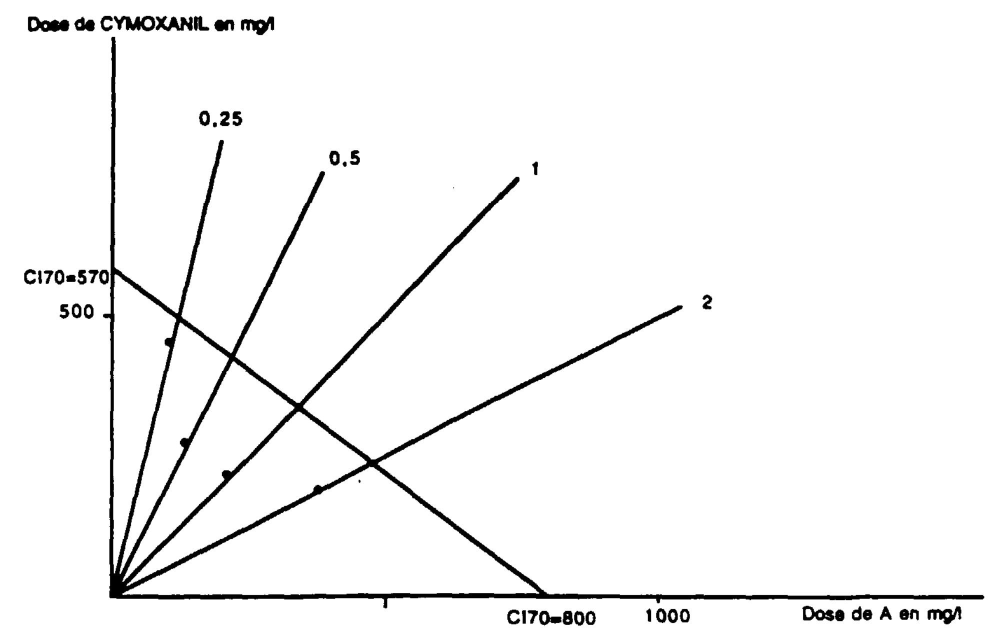
Dose de CYMOXANIL en mg/l
0,25
0,5
1
2
CI70=570
500
CI70=800
1000
Dose de A en mg/l

**Figure 14**

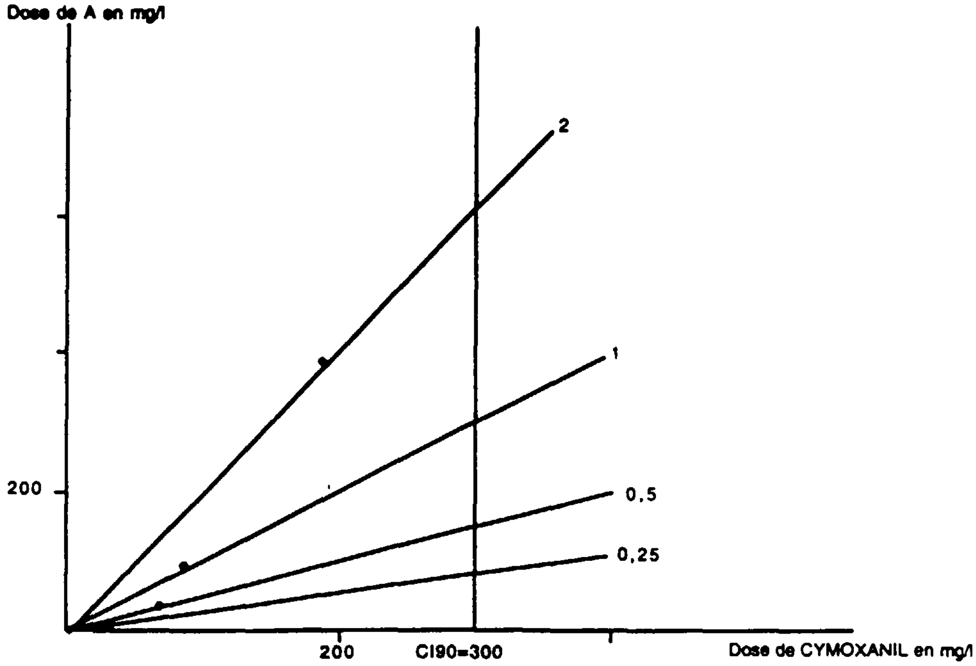
Dose de A en mg/l
200
2
1
0,5
0,25
200
CI90=300
Dose de CYMOXANIL en mg/l

**Figure 15**

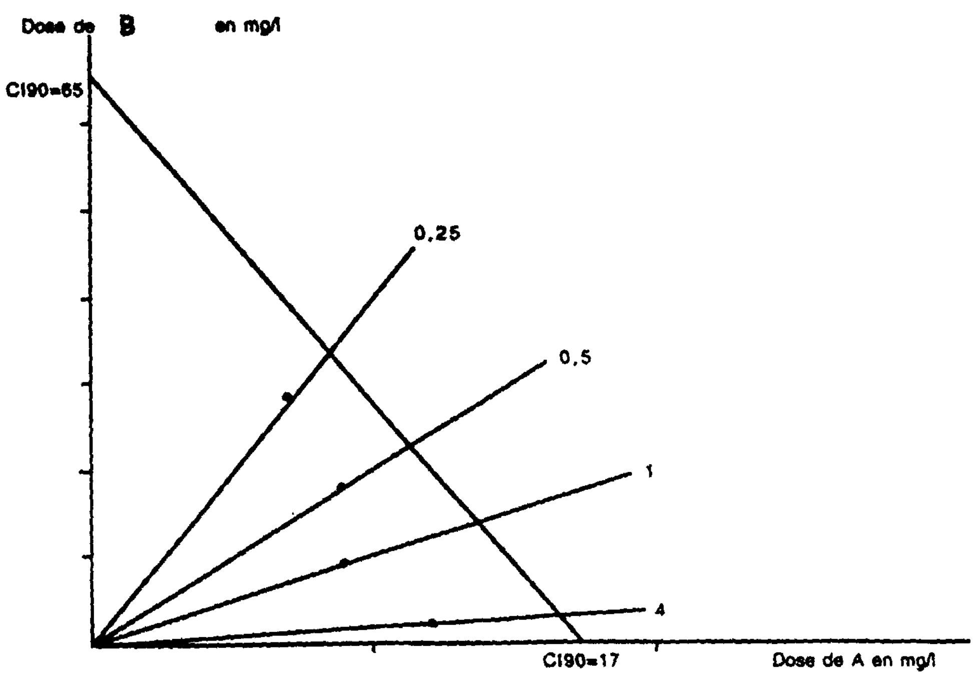

Figure 16

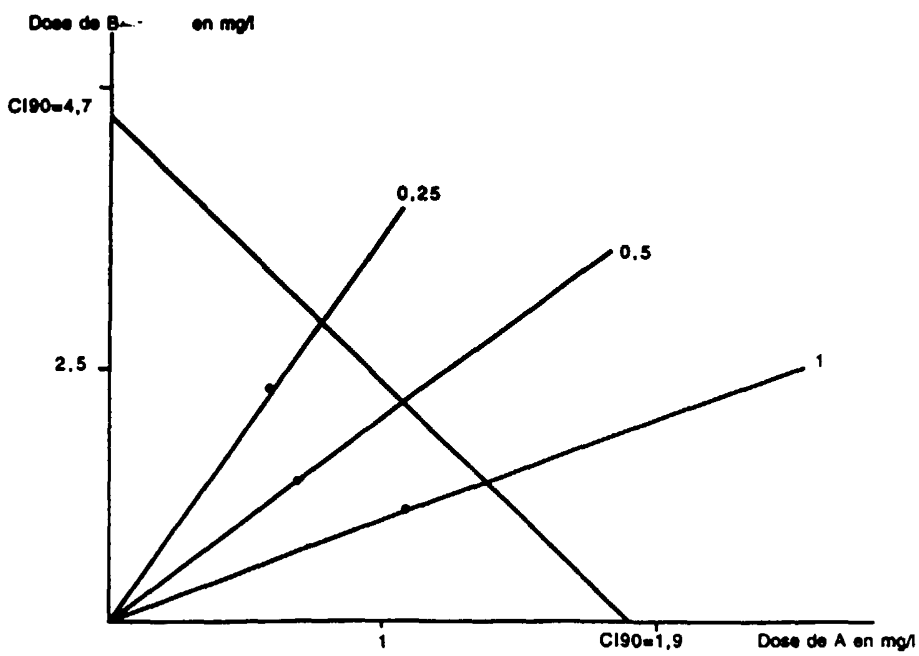

Figure 17

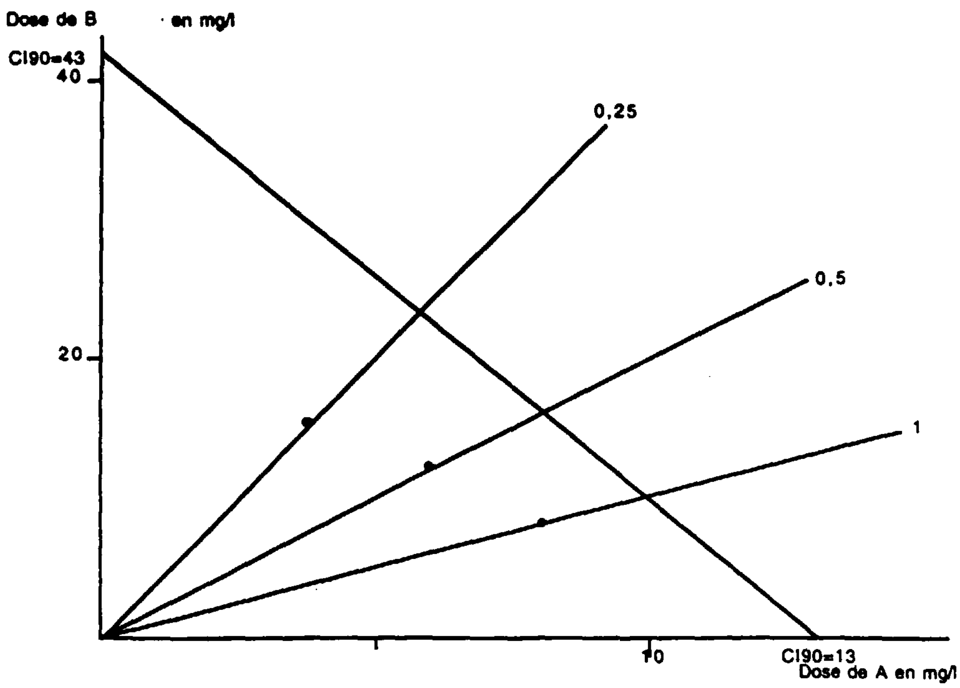

**Figure 18**

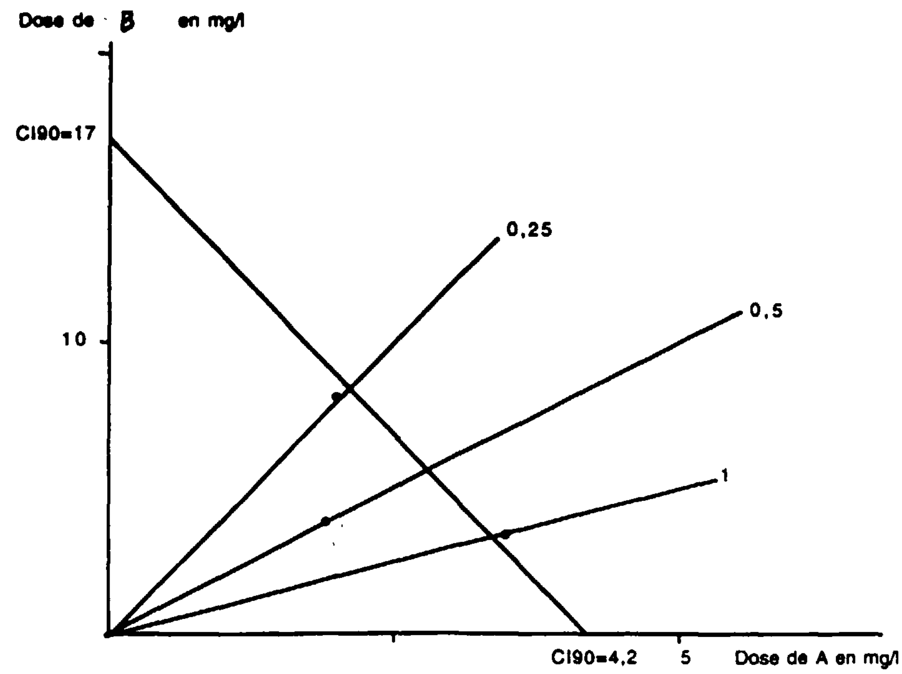

Figure 19

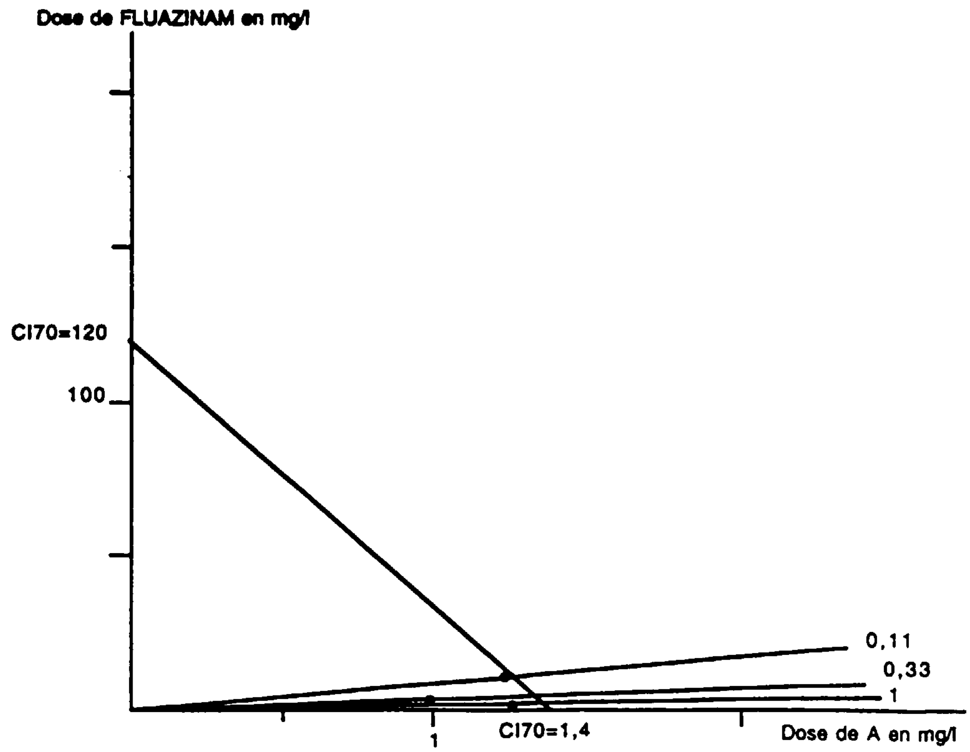
Dose de FLUAZINAM en mg/l
CI70=120
100
0,11
0,33
1
1
CI70=1,4
Dose de A en mg/l

Figure 20

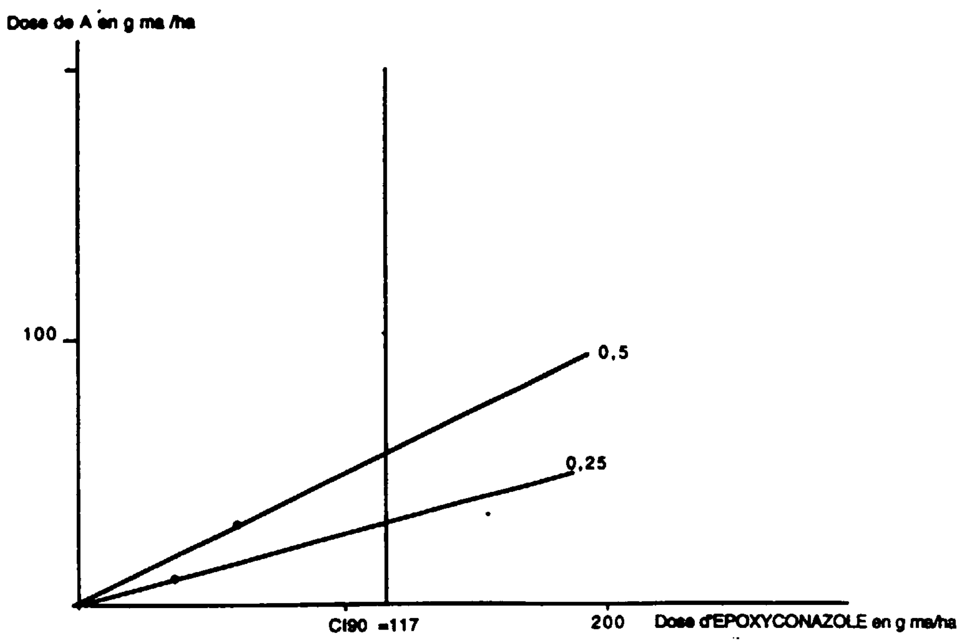
Dose de A en g ma /ha
100
0,5
0,25
CI90 =117
200
Dose d'EPOXYCONAZOLE en g ma/ha

**Figure 21**

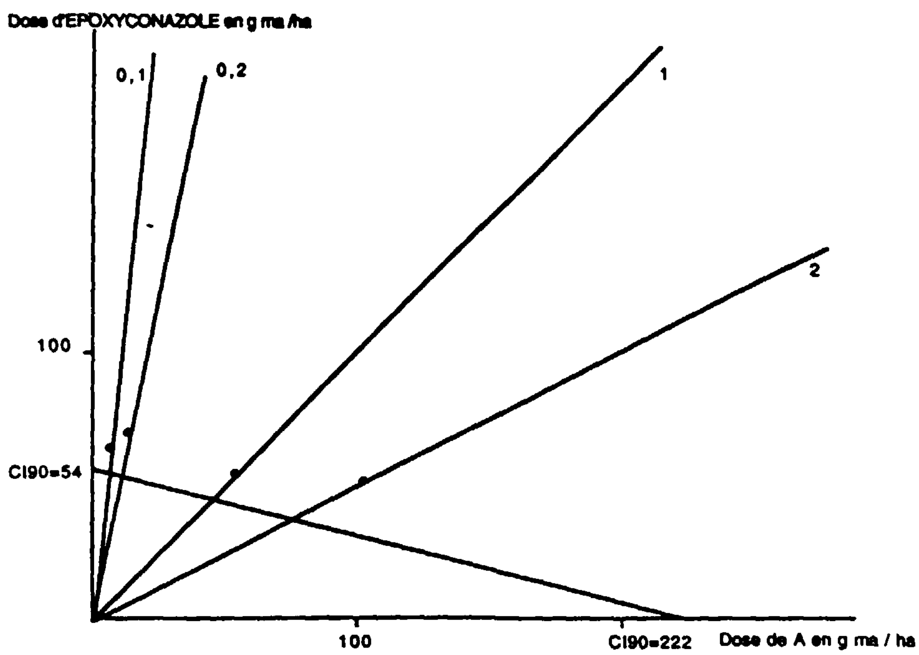
Dose d'EPOXYCONAZOLE en g ma /ha
0,1
0,2
1
2
100
CI90=54
100
CI90=222
Dose de A en g ma / ha

Figure 22

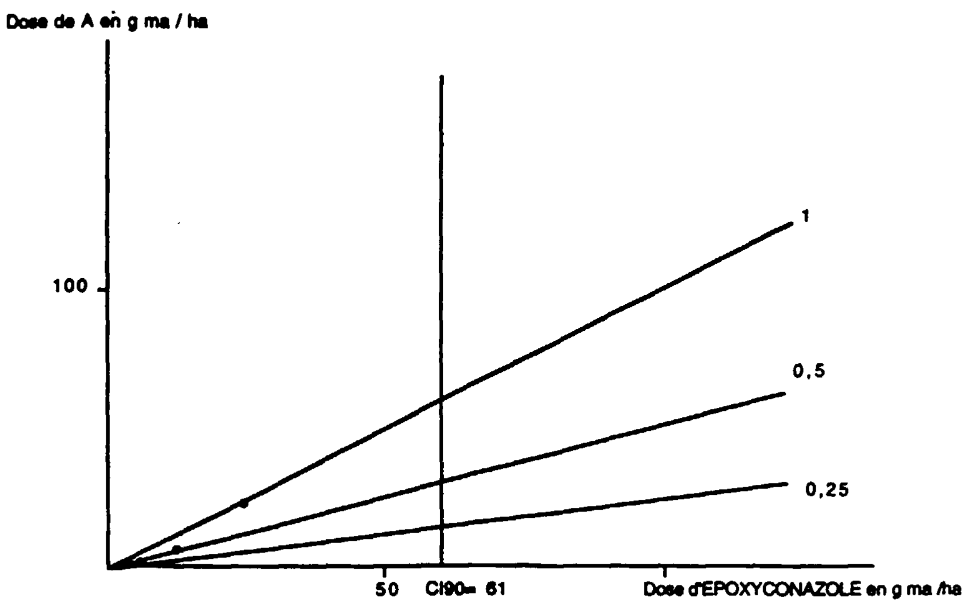
Dose de A en g ma / ha
100
1
0,5
0,25
50
CI90= 61
Dose d'EPOXYCONAZOLE en g ma /ha

**Figure 23**

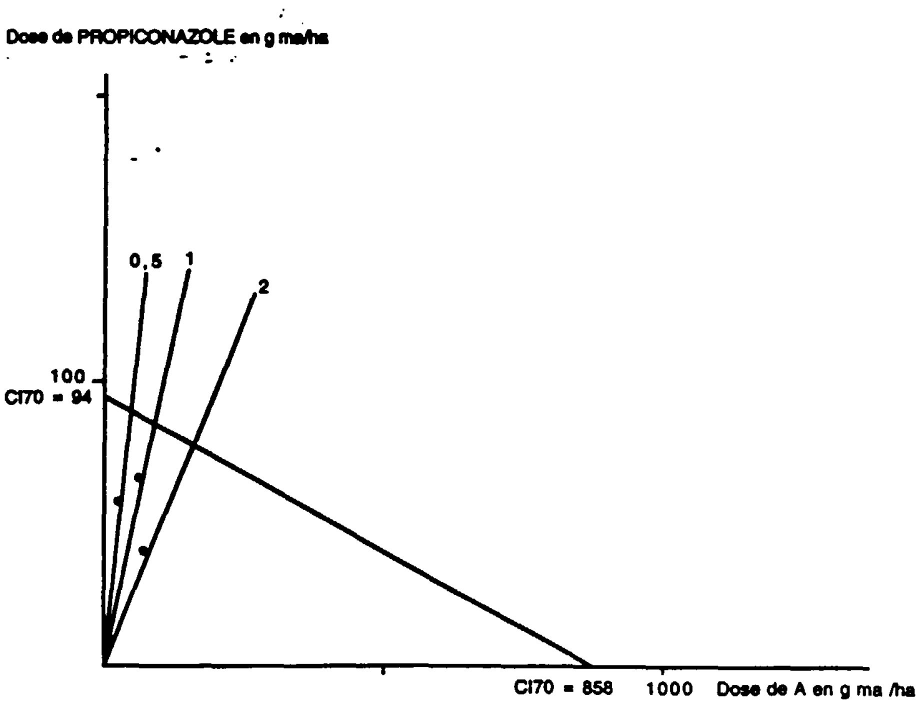
Dose de PROPICONAZOLE en g ma/ha
0,5
1
2
100
CI70 = 94
CI70 = 858
1000
Dose de A en g ma /ha

Figure 24

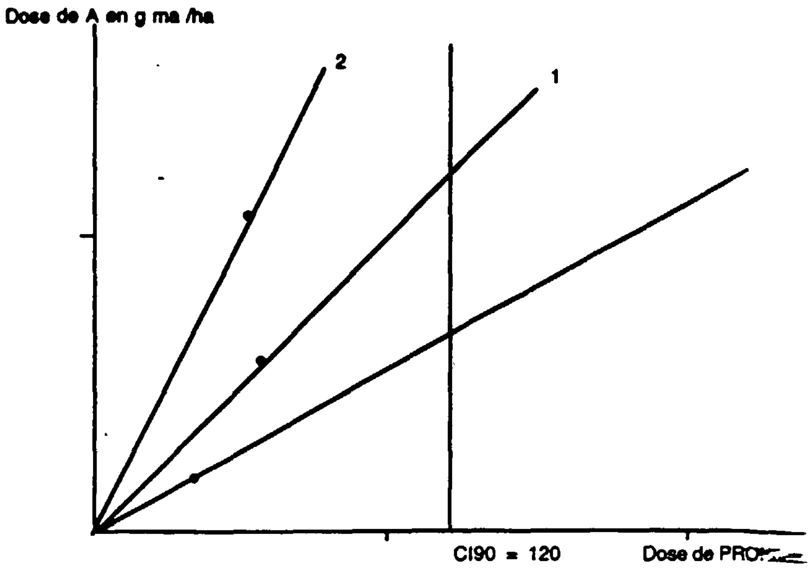

# Figure 25

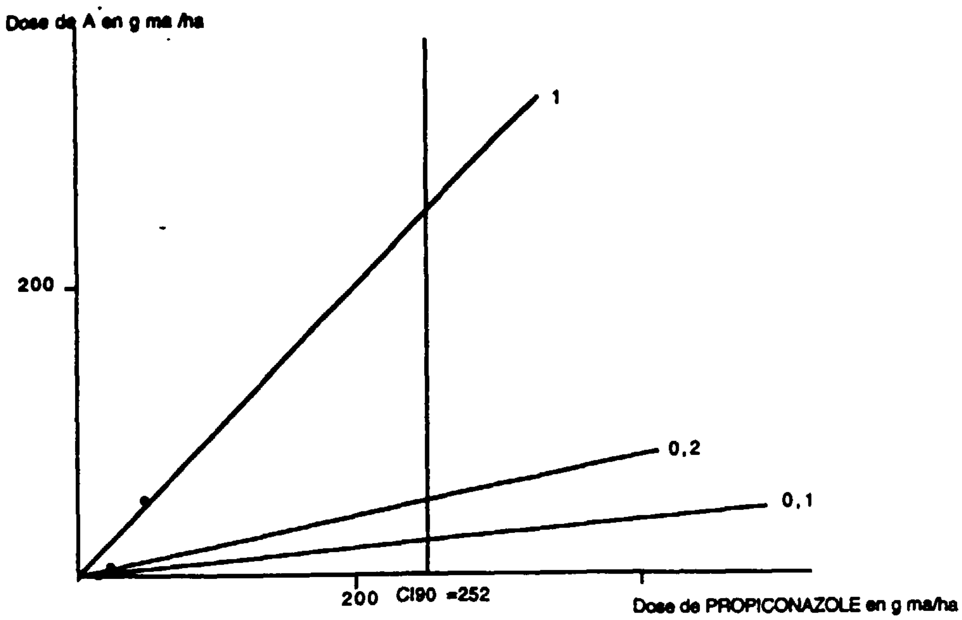
Dose de A en g ma /ha
200
1
0,2
0,1
200
CI90 =252
Dose de PROPICONAZOLE en g ma/ha

Figure 26

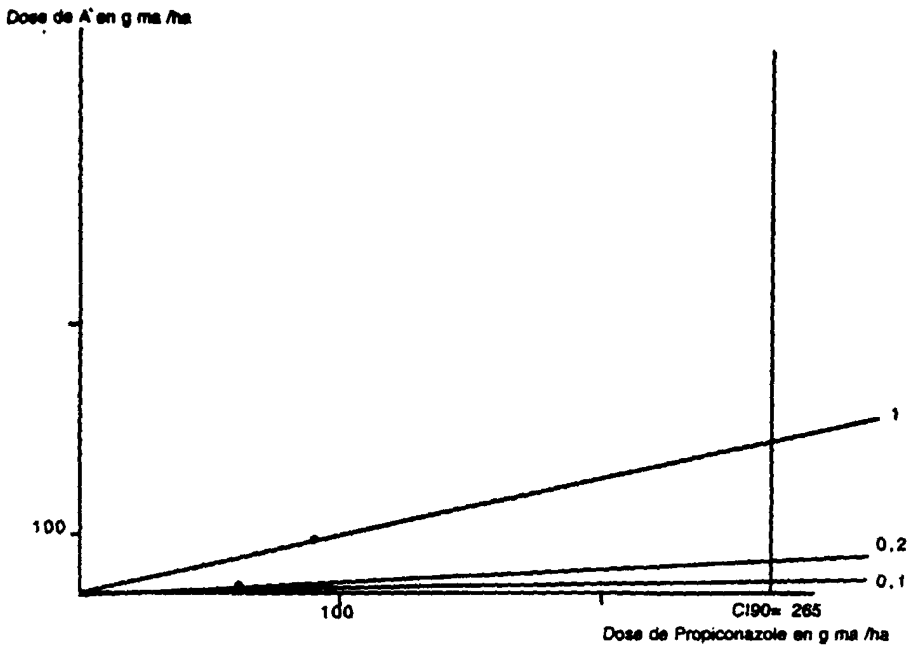
Dose de A' en g ma /ha
100
1
0,2
0,1
100
CI90= 265
Dose de Propiconazole en g ma /ha

Figure 27

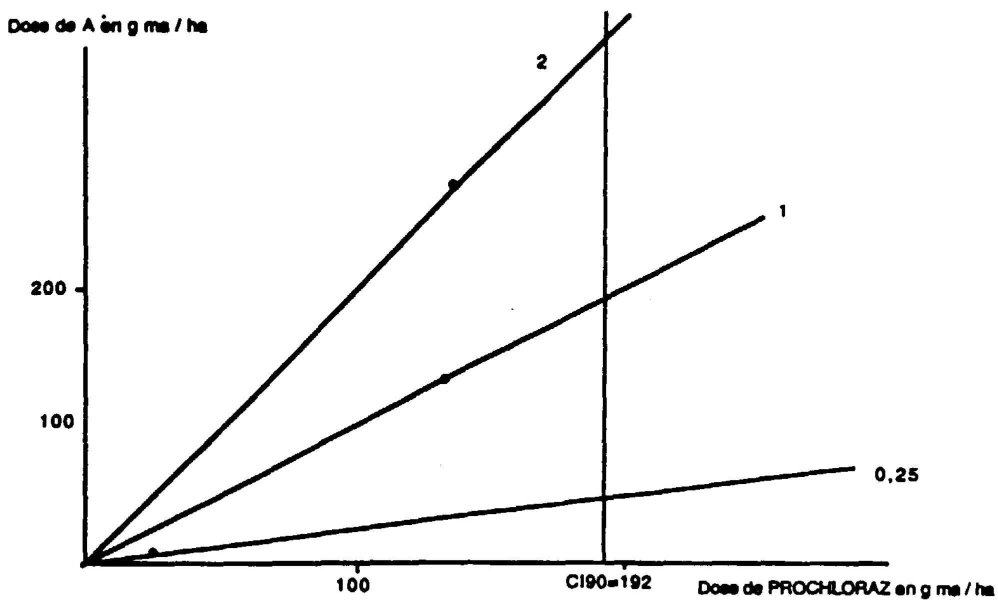
Dose de A en g ma / ha
200
100
2
1
0,25
100
CI90=192
Dose de PROCHLORAZ en g ma / ha

Figure 28

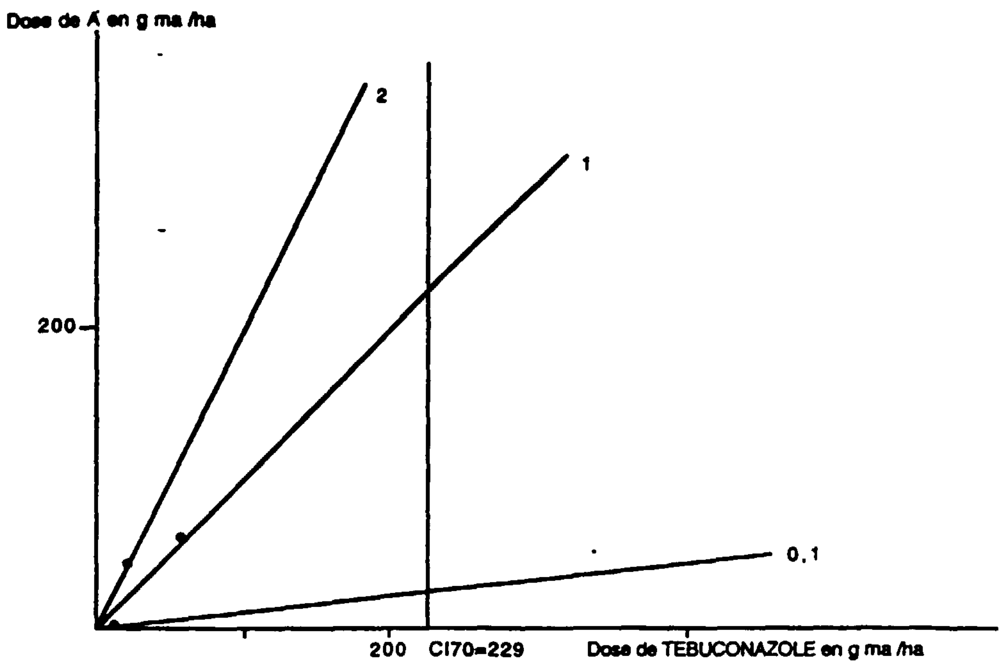
Dose de A en g ma /ha
200
2
1
0,1
200
CI70=229
Dose de TEBUCONAZOLE en g ma /ha

**Figure 29**

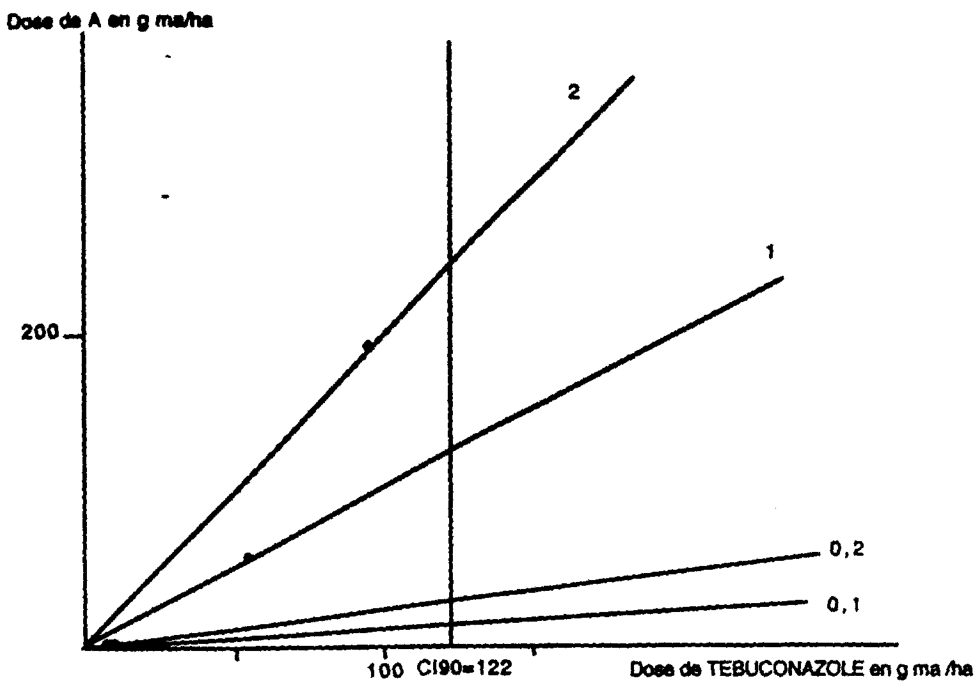
Dose de A en g ma/ha
200
2
1
0,2
0,1
100
CI90=122
Dose de TEBUCONAZOLE en g ma /ha